(19) Europäisches Patentamt
European Patent Office
Office européen des brevets

(11) EP 4 165 155 B1

(12) EUROPEAN PATENT SPECIFICATION

(45) Date of publication and mention of the grant of the patent:
**30.04.2025 Bulletin 2025/18**

(21) Application number: **21734735.0**

(22) Date of filing: **09.06.2021**

(51) International Patent Classification (IPC):
***C11D 3/22*** *(2006.01)*

(52) Cooperative Patent Classification (CPC):
**C11D 3/226;** C11D 2111/12; C11D 2111/14

(86) International application number:
**PCT/US2021/036509**

(87) International publication number:
**WO 2021/252559 (16.12.2021 Gazette 2021/50)**

(54) **A LAUNDRY CARE OR DISH CARE COMPOSITION COMPRISING A POLY ALPHA-1,6-GLUCAN ESTER**

WÄSCHEPFLEGE- ODER GESCHIRRPFLEGEZUSAMMENSETZUNG MIT EINEM POLY-ALPHA-1,6-GLUCANESTER

COMPOSITION DE SOIN DU LINGE OU DE SOIN DE LA VAISSELLE COMPRENANT UN ESTER DE POLY ALPHA-1,6-GLUCANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2020 US 202063037012 P**
**16.06.2020 EP 20180321**

(43) Date of publication of application:
**19.04.2023 Bulletin 2023/16**

(73) Proprietor: **The Procter & Gamble Company**
**Cincinnati, OH 45202 (US)**

(72) Inventors:
- **SIVIK, Mark, Robert**
  **Cincinnati, Ohio 45202 (US)**
- **FLITER, Kristine Lynn**
  **Cincinnati, Ohio 45202 (US)**
- **BOUTIQUE, Jean-Pol**
  **1853 Strombeek-Bever (BE)**
- **FAIRWEATHER, Neil Thomas**
  **Cincinnati, Ohio 45202 (US)**
- **SI, Gang**
  **Newcastle upon Tyne, NE12 9BZ (GB)**
- **CHILTON, Ruth**
  **Newcastle upon Tyne, NE12 9BZ (GB)**
- **GOOD, David**
  **Cincinnati, Ohio 45202 (US)**
- **HUANG, Zheng-Zheng**
  **Hockessin, Delaware 19707 (US)**
- **LU, Helen**
  **Wallingford, Pennsylvania 19086 (US)**
- **ADELMAN, Douglas**
  **Wilmington, Delaware 19810 (US)**

(74) Representative: **P&G Patent Belgium UK**
**N.V. Procter & Gamble Services Company S.A.**
**Temselaan 100**
**1853 Strombeek-Bever (BE)**

(56) References cited:
**US-A1- 2002 052 302**
**US-A1- 2016 122 445**
**US-A1- 2019 390 138**
**US-A1- 2020 002 646**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

FIELD OF THE DISCLOSURE

The present disclosure is directed towards compositions comprising a poly alpha-1,6-glucan ester compound having a backbone of glucose monomer units wherein greater than or equal to 40% of the glucose monomer units are linked via alpha-1,6-glycosidic linkages and a degree of substitution of 0.001 to 1.50.

BACKGROUND

Driven by a desire to find new structural polysaccharides using enzymatic syntheses or genetic engineering of microorganisms, researchers have discovered oligosaccharides and polysaccharides that are biodegradable and can be made economically from renewably-sourced feedstocks. Hydrophobicallly modified polysaccharides derived from enzymatic syntheses or genetic engineering of microorganisms can find applications as viscosity modifiers, emulsifiers, film formers in liquid formulations such as laundry, fabric care, cleaning, and personal care compositions.

Modern detergent compositions, including laundry, fabric, dishwashing or other cleaning compositions, comprise common detergent ingredients such as anionic, nonionic, cationic, amphoteric, zwitterionic, and/or semi-polar surfactants; as well as enzymes such as proteases, cellulases, lipases, amylases, and/or peroxidases. Laundry detergent and/or fabric care compositions may further comprise various detergent ingredients having one or more purposes in obtaining fabrics which are not only clean, fresh, and sanitized but also have retained appearance and integrity. Therefore, benefit agents such as perfumes, hygiene agents, insect control agents, bleaching agents, fabric softeners, dye fixatives, soil release agents, and fabric brightening agents have been incorporated into laundry detergent and/or fabric care compositions. In using such detergent components, it is important that some of these compounds deposit on the fabrics so as to be effective during or after the laundering and/or fabric care process.

There is a continuing need for new materials which can be used in aqueous applications such as fabric care, for example as anti-deposition and/or anti-graying agents and/or whiteness benefit agents in laundry detergents, and in laundry care and dish care applications. There remains a need for such materials which can be made from renewable resources and biodegradable

US 2020/002646 relates to a composition comprising a polysaccharide derivative which is substituted with at least one hydrophilic group and at least one hydrophobic group.

SUMMARY

The present invention relates to a laundry care or dish care composition comprising a poly alpha-1,6-glucan ester compound, where the poly alpha-1,6-glucan ester compound comprises:

(i) a poly alpha-1,6-glucan backbone wherein 40% or more of the glucose monomer units are linked via alpha-1,6-glycosidic linkages; and from 0 to 50% glucose units of the poly alpha-1,6 glucan backbone further contains glucose branching moiety linked via alpha-1,2- or alpha-1,3-glycosidic linkages; and

(ii) one or more ester groups selected from:

(a) an aryl ester group;
(b) a first acyl group comprising -CO-R", wherein R" comprises a chain of 1 to 24 carbon atoms, and
(c) a second acyl group comprising -CO-Cx-COOH, wherein the -Cx- portion of the second acyl group comprises a chain of 2 to 24 carbon atoms,

wherein the poly alpha-1,6-glucan ester compound has a degree of polymerization (DPn) in the range of 5 to 1400, and

wherein the degree of substitution of ester groups is from 0.001 to 1.50.

In one embodiment, at least 5% of the backbone glucose monomer units have glycosidic branches moiety linked via alpha-1,2- or alpha-1,3-glycosidic linkages.

In one embodiment, the degree of substitution of ester group is 0.01 to 0.90. In another embodiment, the degree of substitution of ester group is 0.01 to 0.80. In a further embodiment, the degree of substitution of ester group is 0.01 to 0.70.

The poly alpha-1,6-glucan ester compound has a weight average degree of polymerization in the range of from 5 to 1400.

In one embodiment, the poly alpha-1,6-glucan ester compound has a biodegradability as determined by the Carbon Dioxide Evolution Test Method of at least 10% on the $90^{th}$ day.

In one embodiment, the ester group modification is independently an aryl ester group, or a first acyl group. In one embodiment, the aryl ester group comprises a benzoyl group or a benzoyl group substituted with at least one halogen, alkyl, halogenated alkyl, ether, cyano, or aldehyde group, or a combination thereof. In one embodiment, the first acyl group is an acetyl, an ethanoyl, or a propionyl group. In one embodiment, the ester group modification is independently an aryl ester group, or a first acyl group, wherein the aryl ester group comprises a benzoyl group and the first acyl group is an acetyl, an ethanoyl, or a propionyl group. In one embodiment, the ester group modification comprises at least one first acyl group. In one embodiment, the ester group modification comprises at least one second acyl group. In one embodiment, the ester group modification comprises at least one first acyl group and at least one second acyl group. In one embodiment, the ester group modification comprises at least one second acyl group, wherein the $-C_x-$ portion comprises only $CH_2$ groups. In one embodiment, the ester group modification comprises at least one second acyl group, wherein the $-C_x-$ portion of the second acyl group comprises i) at least one double-bond in the carbon atom chain, and/or ii) at least one branch comprising an organic group. In one embodiment, the acyl or aryl group may be branched with a $C_1$-$C_6$ alkyl group.

In another embodiment, the composition is in the form of a liquid, a gel, a powder, a hydrocolloid, an aqueous solution, a granule, a tablet, a capsule, a single compartment sachet, a multi-compartment sachet, a pad, a single compartment pouch, or a multi-compartment pouch.

In yet another embodiment, the composition further comprises at least one of a surfactant, an enzyme, a detergent builder, a complexing agent, a polymer, a dispersant, a soil release polymer, a surfactancy-boosting polymer, a bleaching agent, a bleach activator, a bleaching catalyst, a fabric conditioner, a clay, a foam booster, a suds suppressor, an anti-corrosion agent, a soil-suspending agent, an anti-soil re-deposition agent, a dye, a bactericide, a tarnish inhibitor, an optical brightener, a perfume, a saturated or unsaturated fatty acid, a dye transfer inhibiting agent, a chelating agent, a hueing dye, a calcium cation, a magnesium cation, a visual signaling ingredient, an anti-foam, a structurant, a thickener, an anti-caking agent, a starch, sand, a gelling agent, or a combination thereof.

In one embodiment, the enzyme is a cellulase, a protease, an amylase, or a combination thereof. In one embodiment, the enzyme is a cellulase. In another embodiment, the enzyme is a protease. In a further embodiment, the enzyme is an amylase.

The poly alpha-1,6-glucan ester compound according to the invention can also represented by the structure:

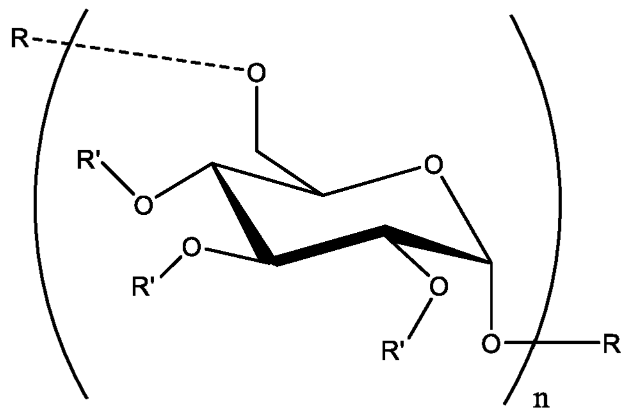

Structure A

wherein each R' is independently one or more selected from a list comprising:

(a) a glucose branching moiety;
(b) an aryl ester functional group;
(c) a first acyl group comprising -CO-R" wherein R" comprises a chain of 1 to 24 carbon atoms; and
(d) a second acyl group comprising $-CO-C_x-COOH$, wherein the $-C_x-$ portion of the second acyl group comprises a chain of 2 to 24 carbon atoms,

wherein each R is independently one or more selected from a list comprising:

(a) an aryl ester functional group;
(b) a first acyl group comprising -CO-R" wherein R" comprises a chain of 1 to 24 carbon atoms; and

(c) a second acyl group comprising $-CO-C_x-COOH$, wherein the $-C_x-$ portion of the second acyl group comprises a chain of 2 to 24 carbon atoms,

wherein 40% or more of the glucose monomer units are linked via alpha-1,6-glycosidic linkages, n is at least 5, and, from 0 to 50% glucose units of the poly alpha-1,6 glucan backbone further contains glucose branching moiety via alpha-1,2- or alpha-1,3-glycosidic linkages,

wherein each glucose branching moiety independently modified by one or more group selected from a list comprising:

(a) an aryl ester functional group;
(b) a first acyl group comprising -CO-R" wherein R" comprises a chain of 1 to 24 carbon atoms; and
(c) a second acyl group comprising $-CO-C_x-COOH$, wherein the $-C_x-$ portion of the second acyl group comprises a chain of 2 to 24 carbon atoms,

wherein the degree of substitution for ester group of the poly alpha-1,6-glucan ester compound is 0.001 to 1.50.

DETAILED DESCRIPTION

As used herein, the term "embodiment" or "disclosure" is not meant to be limiting, but applies generally to any of the embodiments defined in the claims or described herein. These terms are used interchangeably herein.

In this disclosure, a number of terms and abbreviations are used. The following definitions apply unless specifically stated otherwise.

The articles "a", "an", and "the" preceding an element or component are intended to be nonrestrictive regarding the number of instances (i.e. occurrences) of the element or component. There "a", "an", and "the" should be read to include one or at least one, and the singular word form of the element or component also includes the plural unless the number is obviously meant to be singular.

The term "comprising" means the presence of the stated features, integers, steps, or components as referred to in the claims, but that it does not preclude the presence or addition of one or more other features, integers, steps, components, or groups thereof. The term "comprising" is intended to include embodiments encompassed by the terms "consisting essentially of" and "consisting of". Similarly, the term "consisting essentially of" is intended to include embodiments encompassed by the term "consisting of".

Where present, all ranges are inclusive and combinable. For example, when a range of "1 to 5" is recited, the recited range should be construed as including ranges "1 to 4", "1 to 3", 1-2", "1-2 and 4-5", "1-3 and 5", and the like.

As used herein in connection with a numerical value, the term "" refers to a range of +/- 0.5 of the numerical value, unless the term is otherwise specifically defined in context. For instance, the phrase a "pH value of 6" refers to pH values of from 5.5 to 6.5, unless the pH value is specifically defined otherwise.

It is intended that every maximum numerical limitation given throughout this Specification includes every lower numerical limitation, as if such lower numerical limitations were expressly written herein. Every minimum numerical limitation given throughout this Specification will include every higher numerical limitation, as if such higher numerical limitations were expressly written herein. Every numerical range given throughout this Specification will include every narrower numerical range that falls within such broader numerical range, as if such narrower numerical ranges were all expressly written herein.

The features and advantages of the present disclosure will be more readily understood, by those of ordinary skill in the art from reading the following detailed description. It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any sub-combination. In addition, references to the singular may also include the plural (for example, "a" and "an" may refer to one or more) unless the context specifically states otherwise.

As used herein:
The term "polysaccharide" means a polymeric carbohydrate molecule composed of long chains of monosaccharide units bound together by glycosidic linkages and on hydrolysis give the constituent monosaccharides or oligosaccharides.

The terms "percent by weight", "weight percentage (wt%)" and "weight-weight percentage (% w/w)" are used interchangeably herein. Percent by weight refers to the percentage of a material on a mass basis as it is comprised in a composition, mixture or solution.

The phrase "water insoluble" means that less than 1 gram of the polysaccharide or polysaccharide derivative dissolves in 1000 milliliters of water at 23°C.

The term "water soluble" means that the polysaccharide or polysaccharide derivative is soluble at 1% by weight or higher in pH 7 water at 25°C. The percentage by weight is based on the total weight of the polysaccharide soluble in

water, for example, 1 gram of polysaccharide in 100 grams of water.

The term "hydrophobic" refers to a molecule or substituent which is nonpolar and has little or no affinity for water, and which tends to repel water.

The term "molar substitution" (M.S.) as used herein refers to the moles of an organic group per monomeric unit of the polysaccharide or the derivative thereof. It is noted that the molar substitution value for a poly alpha-1,6-glucan derivative, for example, may have a very high upper limit, for example in the hundreds or even thousands. For example, if the organic group is a hydroxyl-containing alkyl group, via the addition of ethylene oxide to one of the hydroxyl groups of the poly alpha-1,6-glucan, then the so-formed hydroxyl group from the ethylene oxide can then be further etherified to form a polyether.

The "molecular weight" of a polysaccharide or polysaccharide derivative can be represented as number-average molecular weight ($M_n$) or as weight-average molecular weight ($M_w$). Alternatively, molecular weight can be represented as Daltons, grams/mole, DPw (weight average degree of polymerization), or DPn (number average degree of polymerization). Various means are known in the art for calculating these molecular weight measurements, such as high-pressure liquid chromatography (HPLC), size exclusion chromatography (SEC), or gel permeation chromatography (GPC).

As used herein, "weight average molecular weight" or "$M_w$" is calculated as $M_w = \Sigma N_i M_i^2 / \Sigma N_i M_i$; where $M_i$ is the molecular weight of a chain and $N_i$ is the number of chains of that molecular weight. The weight average molecular weight can be determined by technics such as static light scattering, gas chromatography (GC), high pressure liquid chromatography (HPLC), gel permeation chromatography (GPC), small angle neutron scattering, X-ray scattering, and sedimentation velocity.

As used herein, "number average molecular weight" or "$M_n$" refers to the statistical average molecular weight of all the polymer chains in a sample. The number average molecular weight is calculated as $M_n = \Sigma N_i M_i / \Sigma N_i$ where $M_i$ is the molecular weight of a chain and $N_i$ is the number of chains of that molecular weight. The number average molecular weight of a polymer can be determined by technics such as gel permeation chromatography, viscometry via the (Mark-Houwink equation), and colligative methods such as vapor pressure osmometry, end-group determination, or proton NMR.

Glucose carbon positions 1, 2, 3, 4, 5 and 6 as referred to herein are as known in the art and depicted in Structure I:

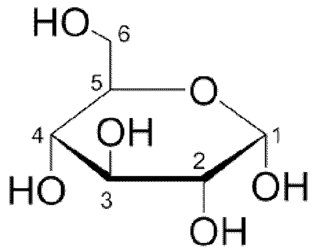

Structure I.

The terms "glycosidic linkage" and "glycosidic bond" are used interchangeably herein and refer to the type of covalent bond that joins a carbohydrate (sugar) molecule to another group such as another carbohydrate. The term "alpha-1,6-glucosidic linkage" as used herein refers to the covalent bond that joins alpha-D-glucose molecules to each other through carbons 1 and 6 on adjacent alpha-D-glucose rings. The term "alpha-1,3-glucosidic linkage" as used herein refers to the covalent bond that joins alpha-D-glucose molecules to each other through carbons 1 and 3 on adjacent alpha-D-glucose rings. The term "alpha-1,2-glucosidic linkage" as used herein refers to the covalent bond that joins alpha-D-glucose molecules to each other through carbons 1 and 2 on adjacent alpha-D-glucose rings. The term "alpha-1,4-glucosidic linkage" as used herein refers to the covalent bond that joins alpha-D-glucose molecules to each other through carbons 1 and 4 on adjacent alpha-D-glucose rings. Herein, "alpha-D-glucose" will be referred to as "glucose".

The term "glucose branching moiety" as used herein refers to glucose units that exist as branch of the poly alpha-1,6 glucan backbone. In this invention, the glucose branching moiety is linked to the poly alpha-1,6 glucan backbone via alpha-1,2- or alpha-1,3-glycosidic linkages.

The glycosidic linkage profile of a glucan, dextran, substituted glucan, or substituted dextran can be determined using any method known in the art. For example, a linkage profile can be determined using methods that use nuclear magnetic resonance (NMR) spectroscopy (e.g., $^{13}C$ NMR or $^{1}H$ NMR). These and other methods that can be used are disclosed in Food Carbohydrates: Chemistry, Physical Properties, and Applications (S. W. Cui, Ed., Chapter 3, S. W. Cui, Structural Analysis of Polysaccharides, Taylor & Francis Group LLC, Boca Raton, FL, 2005).

The structure, molecular weight, and degree of substitution of a polysaccharide or polysaccharide derivative can be confirmed using various physiochemical analyses known in the art such as NMR spectroscopy and size exclusion chromatography (SEC).

The present disclosure is directed to a laundry or dish composition comprising a poly alpha-1,6-glucan ester

compound, where the poly alpha-1,6-glucan ester compound comprises:

(i) a poly alpha-1,6-glucan backbone wherein 40% or more of the glucose monomer units are linked via alpha-1,6-glycosidic linkages; and from 0 to 50% glucose units of the poly alpha-1,6 glucan backbone further contains glucose branching moiety linked via alpha-1,2- or alpha-1,3-glycosidic linkages; and

(ii) one or more ester groups selected from:

(a) an aryl ester group;
(b) a first acyl group comprising -CO-R", wherein R" comprises a chain of 1 to 24 carbon atoms, and
(c) a second acyl group comprising -CO-Cx-COOH, wherein the -Cx- portion of the second acyl group comprises a chain of 2 to 24 carbon atoms,

wherein the poly alpha-1,6-glucan ester compound has a degree of polymerization (DPn) in the range of 5 to 1400, and

wherein the degree of substitution of ester groups is from 0.001 to 1.50.

Optionally, at least 5% of the backbone glucose monomer units have glucose branching moiety linked via alpha-1,2- or alpha-1,3-glycosidic linkages.

Mixtures of poly alpha-1,6-glucan ester compounds can also be used.

The poly alpha-1,6-glucan ester compounds disclosed herein contain hydrophobic substituents and are of interest due to their solubility characteristics in water and solutions containing surfactants, which can be varied by appropriate selection of substituents and the degree of substitution. Compositions comprising the poly alpha-1,6-glucan ester compounds can be useful in a wide range of applications, including laundry, cleaning, food, cosmetics, industrial, film, and paper production. Compositions comprising poly alpha-1,6-glucan ester compounds as disclosed herein and having solubility of 1% by weight or higher in pH 7 water at 25 °C may be useful in aqueous based applications such as laundry, dish care and cleaning.

There is increasing interest to develop biodegradable materials for the above mentioned applications. Compositions comprising poly alpha-1,6-glucan ester compounds may be sustainable materials in the above mentioned applications. Furthermore, biodegradable alpha-1,6-glucan derivatives are preferred over non-degradable materials from an environmental footprint perspective. Biodegradability of a material can be evaluated by methods known in the art, for example as disclosed in the Examples section herein below. In one embodiment, a poly alpha-1,6-glucan ester compound has a biodegradability as determined by the Carbon Dioxide Evolution Test Method (OECD Guideline 301B) of at least 10% after 90 days. In another embodiment, the poly alpha-1,6-glucan ester compound has a biodegradability as determined by the Carbon Dioxide Evolution Test Method of at least 5%, 10%, 15%, 20%, 25%, 30%, 35%, 40%, 45%, 50%, 55%, 60%, 65%, 70%, 75%, or 80%, or any value between 5% and 80%, on the 90$^{th}$ day. In yet another embodiment, the poly alpha-1,6-glucan ester compound has a biodegradability as determined by the Carbon Dioxide Evolution Tet Method of at least 5%, 10%, 15%, 20%, 25%, 30%, 35%, 40%, 45%, 50%, 55%, or 60%, or any value between 5% and 60%, on the 60$^{th}$ day.

The poly alpha-1,6-glucan ester compounds disclosed herein can be comprised in a detergent composition in an amount that provides a desired degree of one or more of the following physical properties to the product: thickening, freeze/thaw stability, lubricity, moisture retention and release, texture, consistency, shape retention, emulsification, binding, suspension, dispersion, and gelation, for example. Examples of a concentration or amount of a poly alpha-1,6-glucan derivative as disclosed herein in a product, on a weight basis, can be 0.1-3 wt%, 1-2 wt%, 1.5-2.5 wt%, 2.0 wt%, 0.1-4 wt%, 0.1-5 wt%, or 0.1-10 wt%, for example.

The poly alpha-1,6-glucan ester compounds disclosed herein comprise a backbone of poly alpha-1,6-glucan randomly substituted with ester functional groups along the polysaccharide backbone, such that the polysaccharide backbone comprises unsubstituted and substituted alpha-D-glucose rings.

In embodiments wherein at least 5% of the backbone glucose monomer units have glucose branching moiety via alpha-1,2- or alpha-1,3-glycosidic linkages, the alpha-D-glucose rings of the branches may also be randomly substituted with ester groups. As used herein, the term "randomly substituted" means the substituents on the glucose rings in the randomly substituted polysaccharide occur in a non-repeating or random fashion. That is, the substitution on a substituted glucose ring may be the same or different [i.e. the substituents (which may be the same or different) on different atoms in the glucose rings in the polysaccharide] from the substitution on a second substituted glucose ring in the polysaccharide, such that the overall substitution on the polymer has no pattern. Further, the substituted glucose rings occur randomly within the polysaccharide (i.e., there is no pattern with the substituted and unsubstituted glucose rings within the polysaccharide).

Depend on the reaction conditions, it is possible that glucose carbon positions 1, 2, 3, 4, and 6 as referred in

Structure I are disproportionally substituted. For example, the -OH group at carbon position 6 is a primary hydroxyl group and may exist in an environment which have less steric hindrance, this OH group at carbon position 6 may have higher reactivity in certain reaction conditions. Therefore, more ester modification substitution may happen on this position.

Depend on the reaction conditions, it is also possible that the ester modification occur "non-randomly" within the polysaccharide. For example, the ester substation may occur disproportionally on glucose units which exist as glucose branching moiety of the polysaccharide. It is also possible that in certain reaction conditions the ester modification may exist in a block manner within the polysaccharide.

The terms "poly alpha-1,6-glucan" and "dextran" are used interchangeably herein. Dextrans represent a family of complex, branched alpha-glucans generally comprising chains of alpha-1,6-linked glucose monomers, with periodic side chains (branches) linked to the straight chains by alpha-1,3-linkage (Ioan et al., Macromolecules 33:5730-5739) or alpha-1,2-linkage. Production of dextrans is typically done through fermentation of sucrose with bacteria (e.g., *Leuconostoc* or *Streptococcus* species), where sucrose serves as the source of glucose for dextran polymerization (Naessens et al., J. Chem. Technol. Biotechnol. 80:845-860; Sarwat et al., Int. J. Biol. Sci. 4:379-386; Onilude et al., Int. Food Res. J. 20:1645-1651). Poly alpha-1,6-glucan can be prepared using glucosyltransferases such as (but not limited to) GTF1729, GTF1428, GTF5604, GTF6831, GTF8845, GTF0088, and GTF8117 as described in WO2015/183714 and WO2017/091533.

The poly alpha-1,6-glucan ester compounds disclosed herein can have a number average degree of polymerization (DPn) in the range of 5 to 1400. In other embodiments, the DPn can be in the range of from 5 to 100, or from 5 to 500, or from 5 to 1000, or from 5 to 1100, or from 5 to 1200, or from 5 to 1300, or from 5 to 1400, or from 40 to 500, or from 50 to 400. In some embodiments, the poly alpha-1,6-glucan ester compound has a weight average degree of polymerization (DPw) of from 5 to 1400, 10 to 400, 10 to 300, 10 to 200, 10 to 100, 10 to 50, 400 to 1400, 400 to 1000, or 500 to 900.

In some embodiments, the poly alpha-1,6-glucan ester compound comprises a backbone of glucose monomer units wherein 40% or more of the glucose monomer units are linked via alpha-1,6-glycosodic linkages, for example greater than or equal to 40%, 45%, 50%, 55%, 60%, 65%, 70%, 75%, 80%, or 90% of the glucose monomer units. The backbone of the poly alpha-1,6-glucan ester compound can comprise 10%, 15%, 20%, 25%, 30%, 35%, 40%, 45%, 50%, 55%, or 60% glucose monomer units which are linked via alpha-1,2, alpha-1,3, and/or alpha-1,4 glycosidic linkages.

Dextran "long chains" herein can comprise "substantially (or mostly) alpha-1,6-glucosidic linkages", meaning that they can have at least 98.0% alpha-1,6-glucosidic linkages in some aspects. Dextran herein can comprise a "branching structure" (branched structure) in some aspects. It is contemplated that in this structure, long chains branch from other long chains, likely in an iterative manner (e.g., a long chain can be a branch from another long chain, which in turn can itself be a branch from another long chain, and so on). It is contemplated that long chains in this structure can be "similar in length", meaning that the length (DP [degree of polymerization]) of at least 70% of all the long chains in a branching structure is within plus/minus 30% of the mean length of all the long chains of the branching structure.

Dextran in some embodiments can also comprise "short chains" branching from the long chains, typically being one to three glucose monomers in length, and typically comprising less than 10% of all the glucose monomers of a dextran polymer. Such short chains typically comprise alpha-1,2-, alpha-1,3-, and/or alpha-1,4-glucosidic linkages (it is understood that there can also be a small percentage of such non-alpha-1,6 linkages in long chains in some aspects). In certain embodiments, the poly-1,6-glucan with branching is produced enzymatically according to the procedures in WO2015/183714 and WO2017/091533 where, for example, alpha-1,2-branching enzymes such as "gtfJ18T1" or "GTF9905" can be added during or after the production of the dextran polymer (polysaccharide). In other embodiments, any other enzyme known to produce alpha-1,2-branching can be added. Poly alpha-1,6-glucan with alpha-1,3-branching can be prepared as disclosed in Vuillemin et al. (2016, J. Biol Chem. 291:7687-7702) or U.S. Appl. No. 62/871,796. The degree of branching of poly alpha-1,6-glucan or its derivative in such embodiments has less than or equal to 50%, 40%, 30%, 20%, 10%, or 5% (or any integer value between 5% and 50%) of short branching, for example alpha-1,2- branching or 1,3-branching. In one embodiment, the poly alpha-1,6-glucan or the poly alpha-1,6-glucan ester compound has a degree of alpha-1,2-branching that is less than 50%. In another embodiment, the poly alpha-1,6-glucan or the poly alpha-1,6-glucan ester compound has a degree of alpha-1,2-branching that is at least 5%. In one embodiment, at least 5% of the backbone glucose monomer units of the poly alpha-1,6-glucan ester compound have branches via alpha-1,2- or alpha-1,3-glycosidic linkages. In one embodiment, the poly apha-1,6-glucan or the poly alpha-1,6-glucan ester compound comprises a backbone of glucose monomer units wherein greater than or equal to 40% of the glucose monomer units are linked via alpha-1,6-glycosidic linkages. In one embodiment, the poly alpha-1,6-glucan or the poly alpha-1,6-glucan ester compound comprises a backbone of glucose monomer units wherein greater than or equal to 40% of the glucose monomer units are linked via alpha-1,6-glycosidic linkages and at least 5% of the glucose monomer units have branches via alpha-1,2- or alpha-1,3-glycosidic linkages. In one embodiment, the poly alpha-1,6-glucan ester compound comprises a backbone of glucose monomer units wherein greater than or equal to 40% of the glucose monomer units are linked via alpha-1,6-glycosidic linkages and at least 5% of the glucose monomer units have branches via alpha-1,2 linkages. In one embodiment, the poly alpha-1,6-glucan ester compound comprises a backbone of glucose monomer units wherein greater than or equal to 40% of the glucose monomer units are linked via alpha-1,6-glycosidic linkages and at least 5% of

the glucose monomer units have branches via alpha-1,3 linkages. In one embodiment, the poly alpha-1,6-glucan or poly alpha-1,6-glucan ester compound is predominantly linear. The amount of alpha-1,2-branching or alpha-1,3-branching can be determined by NMR methods, as disclosed in the Examples.

The term "degree of substitution" (DoS) as used herein refers to the average number of hydroxyl groups substituted in each monomeric unit (glucose) of a poly alpha-1,6-glucan ester compound, including the monomeric units within any alpha-1,2 or alpha-1,3 branches which may be present. Since there are at most three hydroxyl groups in a glucose monomeric unit in a poly alpha-1,6-glucan polymer or poly alpha-1,6-glucan ester compound, the overall degree of substitution can be no higher than 3. It would be understood by those skilled in the art that, since a poly alpha-1,6-glucan ester compound as disclosed herein can have a degree of substitution between 0.001 to 3.00, the substituents on the polysaccharide cannot only be hydrogen. The degree of substitution of a poly alpha-1,6-glucan ester compound can be stated with reference to a specific substituent or with reference to the overall degree of substitution, that is, the sum of the DoS of each different substituent for a glucan ester compound as defined herein. As used herein, when the degree of substitution is not stated with reference to a specific substituent type, the overall degree of substitution of the poly alpha-1,6-glucan ester compound is meant. As used herein, the degree of substitution for ester group is the overall degree of substitution of all ester groups, including aryl ester functional group, the first acyl group comprising -CO-R" wherein R" comprises a chain of 1 to 24 carbon atoms and the second acyl group comprising -CO-Cx-COOH, wherein the -Cx- portion of the second acyl group comprises a chain of 2 to 24 carbon atoms.

The target DoS can be chosen to provide the desired solubility and performance of a composition comprising a poly alpha-1,6-glucan ester compound in the specific application of interest.

In addition to the ester modification as defined in this invention, the poly alpha-1,6 glucan ester compound may have other types of modifications, or modification which connected to the poly alpha-1,6 backbone via other types of linkage, such as -O-, $-OSO_2-$, -O-CO-O-, or

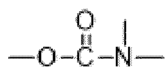 ,

etc. It is preferred that other types of modification or modification via other types of linkage have degree that substitution less than 1, more preferably less than 0.5, more preferably less than 0.1, and most preferably less than 0.05.

The poly alpha-1,6-glucan ester compound according to this invention can also be represented by the structure:

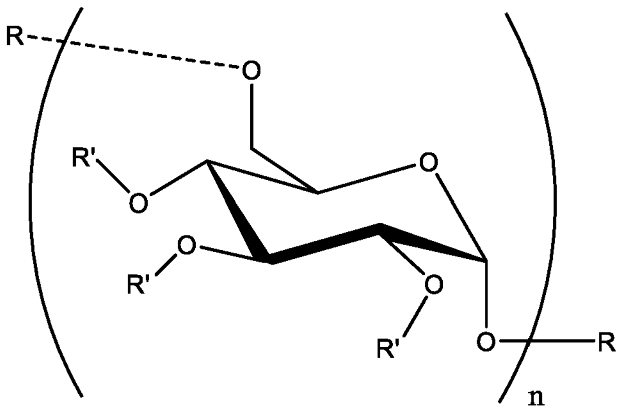

Structure A

wherein each R' is independently one or more selected from a list comprising:

(a) a glucose branching moiety;
(b) an aryl ester functional group;
(c) a first acyl group comprising -CO-R" wherein R" comprises a chain of 1 to 24 carbon atoms; and
(d) a second acyl group comprising $-CO-C_x-COOH$, wherein the $-C_x-$ portion of the second acyl group comprises a chain of 2 to 24 carbon atoms,

wherein each R is independently one or more selected from a list comprising:

(a) an aryl ester functional group;
(b) a first acyl group comprising -CO-R" wherein R" comprises a chain of 1 to 24 carbon atoms; and
(c) a second acyl group comprising -CO-$C_x$-COOH, wherein the -$C_x$- portion of the second acyl group comprises a chain of 2 to 24 carbon atoms,

wherein 40% or more of the glucose monomer units are linked via alpha-1,6-glycosidic linkages, n is at least 5, and, from 0 to 50% glucose units of the poly alpha-1,6 glucan backbone further contains glucose branching moiety via alpha-1,2- or alpha-1,3-glycosidic linkages,

wherein each glucose branching moiety independently modified by one or more group selected from a list comprising:

(a) an aryl ester functional group;
(b) a first acyl group comprising -CO-R" wherein R" comprises a chain of 1 to 24 carbon atoms; and
(c) a second acyl group comprising -CO-$C_x$-COOH, wherein the -$C_x$- portion of the second acyl group comprises a chain of 2 to 24 carbon atoms,

wherein the degree of substitution for ester group of the poly alpha-1,6-glucan ester compound is 0.001 to 1.50.

From 0 to 50%, preferably more than 5% glucose units of the poly alpha-1,6 glucan backbone further contains glucose branching moiety linked via alpha-1,2- or alpha-1,3-glycosidic linkages. That is, from 0 to 50%, preferably more than 5% glucose units of the poly alpha-1,6 glucan backbone are substituted with R' where R' is glucose branching moiety.

The poly alpha-1,6 glucan backbone, including the glucose branching moiety is further derivatized at the 1, 2, 3, 4 and/or 6 hydroxyl position of a glucose monomer. In addition to the R' which already defined as glucose branching moiety, at least one R and the remaining R' is representing an ester group as defined herein. The hydrophobic groups are independently linked to the polysaccharide backbone through an ester chemical linkage (CO-O-, -O-CO-), in place of the hydroxyl group originally present in the underivatized poly alpha-1,6-glucan.

A poly alpha-1,6-glucan ester compound of Structure A is termed an "ester" herein by virtue of comprising the substructure -$C_G$-O-CO-R" or -$C_G$-O-CO-$C_x$-, where "-$C_G$-" represents carbon 1, 2, 3, 4 or 6 of a glucose monomeric unit of a poly alpha-1,6-glucan ester compound, where " -COR" " is comprised in the first acyl group and where "-CO-$C_x$-" is comprised in the second acyl group. A "first acyl group" herein comprises -CO-R", wherein R" comprises a chain of 1 to 24 carbon atoms. A "second acyl group" herein comprises -CO-$C_x$-COOH. The term "-$C_x$-" refers to a portion of the second acyl group that typically comprises a chain of 2 to 24 carbon atoms, each carbon atom preferably having four covalent bonds.

Similarly, in addition to the R' which already defined as glucose branching moiety, the R and the remaining R' is an aryl ester group, a poly alpha-1,6-glucan ester compound of Structure A is termed an "ester" herein by virtue of comprising the substructure -$C_G$-O-CO-Ar, where "-$C_G$-" represents carbon 2, 3, or 4 of a glucose monomeric unit of a poly alpha-1,6-glucan ester compound and where "-CO-Ar" is comprised in the aryl ester group. As used herein, the term "aryl"(abbreviated herein as "Ar") means an aromatic carbocyclic group having a single ring (e.g., phenyl), multiple rings (e.g., biphenyl), or multiple condensed rings in which at least one is aromatic, (e.g., 1,2,3,4-tetrahydronaphthyl, naphthyl, anthryl, or phenanthryl), which is optionally mono-, di-, or trisubstituted with alkyl groups such as a methyl, ethyl, or propyl group. As used herein, the term "aryl ester group" means an aryl group substituted with a carbonyl group to form a moiety represented as -CO-Ar.

In addition to the R' which already defined as glucose branching moiety, the R and the remaining R' of the poly alpha-1,6-glucan ester can be the same or different. Mixtures of poly alpha-1,6-glucan ester compounds can also be used.

Poly alpha-1,6-glucan esters can be prepared using methods analogous to those disclosed for poly alpha-1,3-glucan esters. For example, poly alpha-1,6-glucan esters wherein R' is a first acyl group comprising -CO-R" may be prepared using methods similar to those disclosed in published patent application WO 2014/105698, in which poly alpha-1,3-glucan is contacted in a substantially anhydrous reaction with at least one acid catalyst, at least one acid anhydride, and at least one organic acid. Poly alpha-1,6-glucan esters wherein R' is second acyl group comprising -CO-$C_x$-COOH may be prepared using methods analogous to those disclosed in published patent application WO 2017/003808, in which poly alpha-1,3-glucan is contacted with a cyclic organic anhydride. Poly alpha-1,6-glucan esters wherein R' is an aryl group, or a first acyl group comprising -CO-R", may be prepared using methods similar to those disclosed in published patent application WO 2018/098065, in which poly alpha-1,3-glucan is reacted with an acyl chloride or an acid anhydride under substantially anhydrous reaction conditions. Other methods to esterify polysaccharides are disclosed in "Esterification of Polysaccharides" by Thomas Heinze, et. al,, Springer Laboratories, 2006, ISBN 3-540-32103-9.

In addition to the R' which already defined as glucose branching moiety, each R and the remaining R' groups in the poly alpha-1,6 glucan ester compound can independently be an H, an aryl ester group, a first acyl group comprising

-CO-R", wherein R" comprises a chain of 1 to 24 carbon atoms as defined herein, or a second acyl group comprising -CO-$C_x$-COOH, wherein the -$C_x$- portion of the second acyl group comprises a chain of 2 to 24 carbon atoms as defined herein, and the poly alpha-1,6-glucan ester of Structure A has a DoS in the range of 0.001 to 1.5. In some embodiments the DoS can be from 0.01 to 0.7, or from 0.01 to 0.4, or from 0.01 to 0.2, or from 0.05 to 3, or from 0.001 to 0.4. Alternatively, the DoS can be 0.001, 0.005, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1.0, 1.1, 1.2, 1.3,

1.4, 1.5, 1.6, 1.7, 1.8, 1.9, 2.0, 2.1, 2.2, 2.3, 2.4, 2.5, 2.6, 2.7, 2.8, 2.9, 3.0, or any value between 0.001 and 3. The degree of substitution of a poly alpha-1,6-glucan ester compound can be stated with reference to a specific substituent or with reference to the overall degree of substitution, that is, the sum of the DoS of each different substituent for a glucan ester compound as defined herein. As used herein, when the degree of substitution is not stated with reference to a specific substituent type, the overall degree of substitution of the poly alpha-1,6-glucan ester compound is meant.

In one embodiment of a poly alpha-1,6-glucan ester compound represented by Structure A, in addition to the R' which already defined as glucose branching moiety, the R and the remaining R' is an aryl ester group. In one embodiment, the aryl ester group comprises a benzoyl group (-CO-$C_6H_5$), which is also referred to as a benzoate group. In a further embodiment, the aryl ester group comprises a benzoyl group substituted with at least one halogen, alkyl, halogenated alkyl, ether, cyano, or aldehyde group, or combinations thereof, as represented by the following structures IV(a) through IV(l):

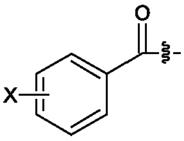
IV(a)

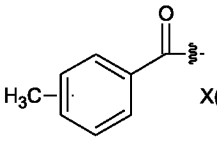
IV(b)

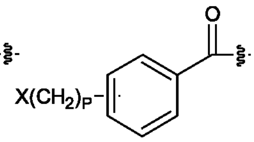
IV(c)

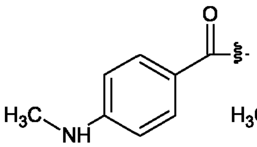
IV(d)

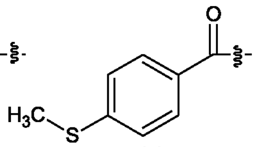
IV(e)

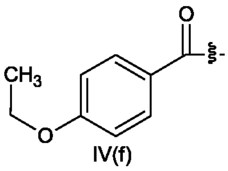
IV(f)

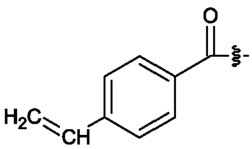
IV(g)

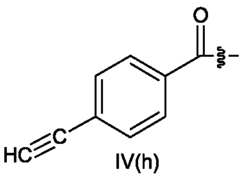
IV(h)

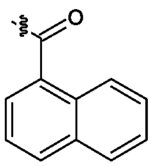
IV(i)

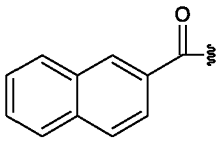
IV(j)

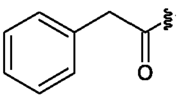
IV(k)

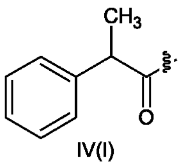
IV(l)

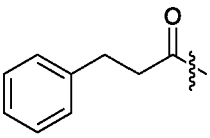
IV(m)

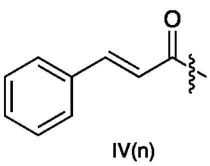
IV(n)

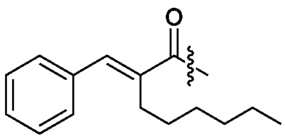
IV(o)

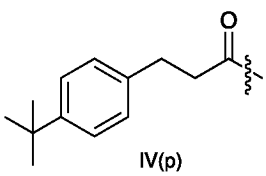
IV(p)

Structures IV(a) – IV(p)

Many substituted benzoyl halides are commercially available and can be used to prepare substituted benzoate esters of poly alpha-1,6-glucan using methods known in the art.

In one embodiment of a poly alpha-1,6-glucan ester compound represented by Structure A, in addition to the R’ which already defined as glucose branching moiety, the R and the remaining R’ is a first acyl group comprising -CO-R", wherein R" comprises a chain of 1 to 24 carbon atoms. The first acyl group may be linear, branched, or cyclic. Examples of first acyl groups which are linear include: an ethanoyl group ($-CO-CH_3$),

a propanoyl group ($-CO-CH_2-CH_3$), a butanoyl group ($-CO-CH_2-CH_2-CH_3$),
a pentanoyl group ($-CO-CH_2-CH_2-CH_2-CH_3$),
a hexanoyl group ($-CO-CH_2-CH_2-CH_2-CH_2-CH_3$),
a heptanoyl group ($-CO-CH_2-CH_2-CH_2-CH_2-CH_2-CH_3$),
an octanoyl group ($-CO-CH_2-CH_2-CH_2-CH_2-CH_2-CH_2-CH_3$),
a nonanoyl group ($-CO-CH_2-CH_2-CH_2-CH_2-CH_2-CH_2-CH_2-CH_3$),
a decanoyl group ($-CO-CH_2-CH_2-CH_2-CH_2-CH_2-CH_2-CH_2-CH_2-CH_3$),
a undecanoyl group ($-CO-CH_2-CH_2-CH_2-CH_2-CH_2-CH_2-CH_2-CH_2-CH_2-CH_3$),
a dodecanoyl group ($-CO-CH_2-CH_2-CH_2-CH_2-CH_2-CH_2-CH_2-CH_2-CH_2-CH_2-CH_3$),
a tridecanoyl group ($-CO-CH_2-CH_2-CH_2-CH_2-CH_2-CH_2-CH_2-CH_2-CH_2-CH_2-CH_2-CH_3$),
a tetradecanoyl group ($-CO-CH_2-CH_2-CH_2-CH_2-CH_2-CH_2-CH_2-CH_2-CH_2-CH_2-CH_2-CH_2-CH_3$),
a pentadecanoyl group ($-CO-CH_2-CH_2-CH_2-CH_2-CH_2-CH_2-CH_2-CH_2-CH_2-CH_2-CH_2-CH_2-CH_2-CH_3$),
a hexadecanoyl group ($-CO-CH_2-CH_2-CH_2-CH_2-CH_2-CH_2-CH_2-CH_2-CH_2-CH_2-CH_2-CH_2-CH_2-CH_2-CH_3$),
a heptadecanoyl group ($-CO-CH_2-CH_2-CH_2-CH_2-CH_2-CH_2-CH_2-CH_2-CH_2-CH_2-CH_2-CH_2-CH_2-CH_2-CH_2-CH_3$),
an octadecanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_3$),
a nonadecanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_2-CH_3$),
an eicosanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_3$),
an uneicosanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_3$),
a docosanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_3$),
a tricosanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_3$),
a tetracosanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_3$),
a pentacosanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_3$), and
a hexacosanoyl group ($-CO-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_2-CH_3$), for example.

Common names for the above are acetyl (ethanoyl group), propionyl (propanoyl group), butyryl (butanoyl group), valeryl (pentanoyl group), caproyl (hexanoyl group); enanthyl (heptanoyl group), caprylyl (octanoyl group), pelargonyl (nonanoyl group), capryl (decanoyl group), lauroyl (dodecanoyl group), myristyl (tetradecanoyl group), palmityl (hexadecanoyl group), stearyl (octadecanoyl group), arachidyl (eicosanoyl group), behenyl (docosanoyl group), lignoceryl (tetracosanoyl group), and cerotyl (hexacosanoyl group)

Examples of first acyl groups which are branched include a 2-methylpropanoyl group; a 2-methylbutanoyl group; a 2,2-dimethylpropanoyl group; a 3-methylbutanoyl group; a 2-methylpentanoyl group; a 3-methylpentanoyl group; a 4-methylpentanoyl group; a 2,2-dimethylbutanoyl group; a 2,3-dimethylbutanoyl group; a 3,3-dimethylbutanoyl group; a 2-ethylbutanoyl group; a 2-ethylhexanoyl group and a 2-propylheptanoyl group.

In one embodiment, the first acyl group encompasses cyclic acyl groups comprising -COR", wherein R" comprises a chain of 1 to 24 carbon atoms and contains at least one cyclic group. Examples of cyclic acyl groups include a cyclopropanoyl group; a cyclobutanoyl group; a cyclopentanoyl group; a cyclohexanoyl group; and a cycloheptanoyl group.

In another embodiment of a poly alpha-1,6-glucan ester compound represented by Structure A, in addition to the R’ which already defined as glucose branching moiety, R and/or the remaining R’ is a second acyl group comprising $-CO-C_x-COOH$, wherein the $-C_x-$ portion of the second acyl group comprises a chain of 2 to 24 carbon atoms. In certain embodiments herein, a poly alpha-1,6-glucan ester compound of Structure A can be in an anionic form under aqueous conditions. This anionic behavior is due to the presence of a carboxyl group (COOH) in the esterified second acyl group

(-CO-$C_x$-COOH). Carboxyl (COOH) groups of a poly alpha-1,6-glucan ester compound herein can convert to carboxylate ($COO^-$) groups in aqueous conditions. These anionic groups can interact with salt cations such as potassium, sodium, or lithium cations, if present.

The terms "reaction" or "esterification reaction" are used interchangeably herein to refer to a reaction comprising, or consisting of, poly alpha-1,6-glucan and at least one cyclic organic anhydride. A reaction may be placed under suitable conditions (e.g., time, temperature, pH) for esterification of one or more hydroxyl groups of the glucose units of poly alpha-1,6-glucan with a acyl group provided by the cyclic organic anhydride, thereby yielding a poly alpha-1,6-glucan ester compound of Structure A wherein in addition to the R' which already defined as glucose branching moiety, R and/or the remaining R' comprises a second acyl group comprising -CO-$C_x$-COOH as defined herein.

A cyclic organic anhydride herein can have a formula represented by Structure IV shown below:

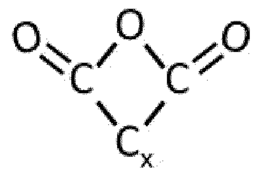

Structure IV.

The -$C_x$- portion of Structure IV typically comprises a chain of 2 to 24 carbon atoms; each carbon atom in this chain preferably has four covalent bonds. It is contemplated that, in some embodiments, the -$C_x$- portion can comprise a chain of 2 to 8, 2 to 16, 2 to 18, or 2 to 24 carbon atoms. During an esterification reaction, the anhydride group (-CO-O-CO-) of a cyclic organic anhydride breaks such that one end of the broken anhydride becomes a -COOH group and the other end is esterified to a hydroxyl group of poly alpha-1,6-glucan, thereby rendering an esterified second acyl group (-CO-$C_x$-COOH). Depending on the cyclic organic anhydride used, there typically can be one or two possible products of such an esterification reaction.

In general, each carbon in the chain, aside from being covalently bonded with an adjacent carbon atom(s) in the chain or a carbon atom of the flanking C=O and COOH groups, can also be bonded to hydrogen(s), a substituent group(s) such as an organic group, and/or be involved in a carbon-carbon double-bond. For example, a carbon atom in the -$C_x$- chain can be saturated (i.e., -$CH_2$-), double-bonded with an adjacent carbon atom in the -$C_x$- chain (e.g., -CH=CH-), and/or be bonded to a hydrogen and an organic group (i.e., one hydrogen is substituted with an organic group). Skilled artisans would understand how the carbon atoms of the -$C_x$- portion of a second acyl group comprising -CO-$C_x$-COOH can typically be bonded, given that carbon has a valency of four.

In certain embodiments, the -$C_x$- portion of the second acyl group (-CO-$C_x$-COOH) comprises only $CH_2$ groups. Examples of a second acyl group in which the -$C_x$- portion comprises only $CH_2$ groups are -CO-$CH_2$-$CH_2$-COOH, -CO-$CH_2$-$CH_2$-$CH_2$-COOH, -CO-$CH_2$-$CH_2$-$CH_2$-$CH_2$-COOH, -CO-$CH_2$-$CH_2$-$CH_2$-$CH_2$-$CH_2$-COOH, -CO-$CH_2$-$CH_2$-$CH_2$-$CH_2$-$CH_2$-$CH_2$-COOH, -CO-$CH_2$-$CH_2$-$CH_2$-$CH_2$-$CH_2$-$CH_2$-$CH_2$-COOH, -CO-$CH_2$-$CH_2$-$CH_2$-$CH_2$-$CH_2$-$CH_2$-$CH_2$-$CH_2$-$CH_2$-COOH, -CO-$CH_2$-$CH_2$-$CH_2$-$CH_2$-$CH_2$-$CH_2$-$CH_2$-$CH_2$-$CH_2$-$CH_2$-COOH, -CO-$CH_2$-$CH_2$-$CH_2$-$CH_2$-$CH_2$-$CH_2$-$CH_2$-$CH_2$-$CH_2$- $CH_2$-$CH_2$-COOH, -CO-$CH_2$-$CH_2$-$CH_2$-$CH_2$-$CH_2$-$CH_2$-$CH_2$-$CH_2$-$CH_2$-$CH_2$-$CH_2$-$CH_2$-COOH, -CO-$CH_2$-$CH_2$-$CH_2$-$CH_2$-$CH_2$-$CH_2$-$CH_2$-$CH_2$-$CH_2$-$CH_2$-$CH_2$-$CH_2$-$CH_2$-COOH, -CO-$CH_2$-$CH_2$-$CH_2$-$CH_2$-$CH_2$-$CH_2$-$CH_2$-$CH_2$-$CH_2$-$CH_2$-$CH_2$-$CH_2$-$CH_2$-$CH_2$-COOH, -CO-$(CH_2)_{15}$-COOH, -CO-$(CH_2)_{16}$-COOH, -CO-$(CH_2)_{17}$-COOH, -CO-$(CH_2)_{18}$-COOH, -CO-$(CH_2)_{19}$-COOH, -CO-$(CH_2)_{20}$-COOH, -CO-$(CH_2)_{21}$-COOH, -CO-$(CH_2)_{22}$-COOH, -CO-$(CH_2)_{23}$-COOH, and -CO-$(CH_2)_{24}$-COOH. These second acyl groups can be derived by reacting succinic anhydride, glutaric anhydride, adipic anhydride, pimelic anhydride, suberic anhydride, and other analogous anhydrides with poly alpha-1,6-glucan.

In some embodiments, the -$C_x$- portion of the second acyl group (-CO-$C_x$-COOH) can comprise (i) at least one double-bond in the carbon atom chain, and/or (ii) at least one branch comprising an organic group. For instance, the -$C_x$- portion of the second acyl group can have at least one double-bond in the carbon atom chain. Examples of a second acyl group in which the -$C_x$- portion comprises a carbon-carbon double-bond include -CO-CH=CH-COOH, -CO-CH=CH-$CH_2$-COOH, -CO-CH=CH-$CH_2$-$CH_2$-COOH, -CO-CH=CH-$CH_2$-$CH_2$-$CH_2$-COOH, -CO-CH=CH-$CH_2$-$CH_2$-$CH_2$-$CH_2$-COOH, -CO-$CH_2$-CH=CH-COOH, -CO-$CH_2$-CH=CH-$CH_2$-COOH, -CO-$CH_2$-CH=CH-$CH_2$-$CH_2$-COOH, -CO-$CH_2$-CH=CH-$CH_2$-$CH_2$-$CH_2$-COOH, -CO-$CH_2$-$CH_2$-CH=CH-COOH, -CO-$CH_2$-$CH_2$-CH=CH-$CH_2$-COOH, -CO-$CH_2$-$CH_2$-CH=CH-$CH_2$-$CH_2$-COOH, -CO-$CH_2$-$CH_2$-$CH_2$-CH=CH-COOH, -CO-$CH_2$-$CH_2$-$CH_2$-CH=CH-$CH_2$-COOH,-CO-$CH_2$-$CH_2$-$CH_2$-$CH_2$-CH=CH-COOH, and analogues of these examples wherein the -$C_x$- portion contains from 7 to 24 carbon atoms. Each of these second acyl groups may be derived by reacting the appropriate cyclic organic anhydride with poly alpha-1,6-glucan. For example, to produce a second acyl group comprising

$-CO-CH=CH-COOH$, maleic anhydride may be reacted with poly alpha-1,6-glucan. Thus, a cyclic organic anhydride comprising a $-C_x-$ portion represented in any of the above-listed second acyl groups (where the corresponding $-C_x-$ portion of a cyclic organic anhydride is that portion linking each side of the anhydride group [-CO-O-CO-] together to form a cycle) can be reacted with poly alpha-1,6-glucan to produce an ester thereof having the corresponding second acyl group ($-CO-C_x-COOH$).

The $-C_x-$ portion of the second acyl group ($-CO-C_x-COOH$) in some aspects herein can comprise at least one branch comprising an organic group. Examples of a second acyl group in which the $-C_x-$ portion comprises at least one organic group branch include:

$-CO-CH_2-CH-COOH$

$CH_2-CH=CH-CH_2-CH_2-CH_2-CH_2-CH_2-CH_3$

and

$-CO-CH-CH_2-COOH$

$CH_2-CH=CH-CH_2-CH_2-CH_2-CH_2-CH_2-CH_3$.

Each of these two second acyl groups may be derived by reacting 2-nonen-1-yl succinic anhydride with poly alpha-1,6-glucan. It can be seen that the organic group branch (generically termed "$R^b$" herein) in both these examples is $-CH_2-CH=CH-CH_2-CH_2-CH_2-CH_2-CH_2-CH_3$. It can also be seen that the $R^b$ group substitutes for a hydrogen in the $-C_x-$ carbon chain.

Thus, for example, a second acyl group ($-CO-C_x-COOH$) herein can be any of $-CO-CH_2-CH_2-COOH$, $-CO-CH_2-CH_2-CH_2-COOH$, $-CO-CH_2-CH_2-CH_2-CH_2-COOH$, $-CO-CH_2-CH_2-CH_2-CH_2-CH_2-COOH$, $-CO-CH_2-CH_2-CH_2-CH_2-CH_2-CH_2-COOH$, or analogous moieties wherein the $-C_x-$ portion contains from 7 to 24 carbon atoms but in which at least one, two, three, or more hydrogens thereof is/are substituted with an $R^b$ group. Also for example, a first group ($-CO-C_x-COOH$) herein can be any of $-CO-CH=CH-CH_2-COOH$, $-CO-CH=CH-CH_2-CH_2-COOH$, $-CO-CH=CH-CH_2-CH_2-CH_2-COOH$, $-CO-CH=CH-CH_2-CH_2-CH_2-CH_2-COOH$, $-CO-CH_2-CH=CH-COOH$, $-CO-CH_2-CH=CH-CH_2-COOH$, $-CO-CH_2-CH=CH-CH_2-CH_2-COOH$, $-CO-CH_2-CH=CH-CH_2-CH_2-CH_2-COOH$, $-CO-CH_2-CH_2-CH=CH-COOH$, $-CO-CH_2-CH_2-CH=CH-CH_2-COOH$, $-CO-CH_2-CH_2-CH=CH-CH_2-CH_2-COOH$, $-CO-CH_2-CH_2-CH_2-CH=CH-COOH$, $-CO-CH_2-CH_2-CH_2-CH=CH-CH_2-COOH$, $-CO-CH_2-CH_2-CH_2-CH_2-CH=CH-COOH$, or analogous moieties wherein the $-C_x-$ portion contains from 7 to 24 carbon atoms but in which at least one, two, three, or more hydrogens thereof is/are substituted with an $R^b$ group (such second acyl groups are examples in which the $-C_x-$ portion comprises at least one double-bond in the carbon atom chain and at least one branch comprising an organic group). Suitable examples of $R^b$ groups herein include alkyl groups and alkenyl groups. An alkyl group herein can comprise 1-18 carbons (linear or branched), for example (e.g., methyl, ethyl, propyl, butyl, pentyl, hexyl, heptyl, octyl, nonyl, or decyl group). An alkenyl group herein can comprise 1-18 carbons (linear or branched), for example (e.g., methylene, ethenyl, propenyl, butenyl, pentenyl, hexenyl, heptenyl, octenyl [e.g., 2-octenyl], nonenyl [e.g., 2-nonenyl], or decenyl group). One of skill in the art would understand, based on the formula of the cyclic organic anhydride represented by Structure IV and its involvement in the esterification process to prepare poly alpha-1,6-glucan esters of Structure A herein, what particular cyclic organic anhydride is suitable for deriving any of these second acyl groups.

Examples of cyclic organic anhydrides by name that may be used in a reaction with poly alpha-1,6-glucan to form a poly alpha-1,6-glucan ester compound represented by Structure A, in addition to the R' which already defined as glucose branching moiety, the R and/or remaining R' is a second acyl group comprising $-CO-C_x-COOH$ include maleic anhydride, methylsuccinic anhydride, methylmaleic anhydride, dimethylmaleic anhydride, 2-ethyl-3-methylmaleic anhydride, 2-hexyl-3-methylmaleic anhydride, 2-ethyl-3-methyl-2-pentenedioic anhydride, itaconic anhydride (2-methylenesuccinic anhydride), 2-nonen-1-yl succinic anhydride, and 2-octen-1-yl succinic anhydride. Alkenyl succinic anhydrides and alkylketene dimers, for example those derived from palmitic acid or other long chain carboxylic acids, can also be used. In particular, for example, maleic anhydride can be used to provide the second acyl group $-CO-CH=CH-COOH$; methylsuccinic anhydride can be used to provide the second acyl group $-CO-CH_2-CH(CH_3)-COOH$ and/or $-CO-CH(CH_3)-CH_2-COOH$; methylmaleic anhydride can be used to provided the second acyl group $-CO-CH=C(CH_3)-COOH$ and/or $-CO-C(CH_3)=CH-COOH$; dimethylmaleic anhydride can be used to provide the second acyl group $-CO-C(CH_3)=C(CH_3)-COOH$; 2-ethyl-3-methylmaleic anhydride can be used to provide the second acyl group $-CO-C(CH_2CH_3)=C(CH_3)-COOH$ and/or $-CO-C(CH_3)=C(CH_2CH_3)-COOH$; 2-hexyl-3-methylmaleic anhydride can be used to provide the second acyl group $-CO-C(CH_2CH_2CH_2CH_2CH_2CH_3)=C(CH_3)-COOH$ and/or $-CO-C(CH_3)=C(CH_2CH_2CH_2CH_2CH_2CH_3)-COOH$; itaconic anhydride can be used to provide the second acyl group $-CO-CH_2-C(CH_2)-COOH$ and/or $-CO-C(CH_2)-CH_2-COOH$; 2-nonen-1-yl succinic anhydride can be used to provide the second

acyl group $-CO-CH_2-CH(CH_2CH=CHCH_2CH_2CH_2CH_2CH_2CH_3)-COOH$ and/or $-CO-CH(CH_2CH=CHCH_2CH_2CH_2CH_2CH_2CH_3)-CH_2-COOH$.

In one embodiment of a composition comprising a poly alpha-1,6-glucan ester compound represented by Structure A as disclosed herein, in addition to the R' which already defined as glucose branching moiety, each R and the remaining R' is independently an aryl ester group, or a first acyl group comprising -CO-R" wherein R" comprises a chain of 1 to 24 carbon atoms. In a further embodiment, the aryl ester group comprises a benzoyl group or a benzoyl group substituted with at least one halogen, alkyl, halogenated alkyl, ether, cyano, or aldehyde group, or combinations thereof. In an additional embodiment, each R' is independently an aryl ester group, or a first acyl group, wherein the first acyl group is an acetyl, an ethanoyl, a propionyl group, or a combination thereof. In yet another embodiment, each R' is independently an aryl ester group, or a first acyl group, wherein the first acyl group is an acetyl, an ethanoyl, a propionyl group, and the aryl ester group comprises a benzoyl group or a benzoyl group substituted with at least one halogen, alkyl, halogenated alkyl, ether, cyano, or aldehyde group, or combinations thereof. In one embodiment, each R' is a benzoyl group, an acetyl group, or a combination thereof. In another embodiment, each R' is a benzoyl group, an ethanoyl group, or a combination thereof. In yet another embodiment, each R' is a benzoyl group, a propionyl group, or a combination thereof.

In one embodiment of a composition comprising a poly alpha-1,6-glucan ester compound represented by Structure A, in addition to the R' which already defined as glucose branching moiety, the R and the remaining R' comprises at least one first acyl group comprising -CO-R" wherein R" comprises a chain of 1 to 24 carbon atoms. In one embodiment, R" comprises a chain of 1 to 12 carbon atoms. In another embodiment, R' comprises at least one first acyl group, and the first acyl group comprises an acetyl group. In one embodiment, R' comprises at least one first acyl group, and the first acyl group comprises an ethanoyl group. In an additional embodiment, R' comprises at least one first acyl group, and the first acyl group comprises a propionyl group.

In another embodiment, in addition to the R' which already defined as glucose branching moiety, the R and the remaining R' comprises at least one second acyl group comprising $-CO-C_x-COOH$, wherein the $-C_x-$ portion of the second acyl group comprises a chain of 2 to 24 carbon atoms. In one embodiment, R' comprises at least one second acyl group, wherein the $-C_x-$portion of the second acyl group comprises a chain of 2 to 12 carbon atoms. In one embodiment, R' comprises at least one second acyl group, wherein the second acyl group comprises $-CO-CH_2-CH_2-COOH$, $-CO-CH_2-CH_2-CH_2-COOH$, $-CO-CH_2-CH_2-CH_2-CH_2-COOH$, $-CO-CH_2-CH_2-CH_2-CH_2-CH_2-COOH$, or $-CO-CH_2-CH_2-CH_2-CH_2-CH_2-CH_2-COOH$. In an additional embodiment, R' comprises at least one second acyl group, wherein the $-C_x-$ portion of the second acyl group comprises only $CH_2$ groups. In yet another embodiment, R' comprises at least one second acyl group, wherein the $-C_x-$ portion of the second acyl group comprises at least one double-bond in the carbon atom chain, and/or at least one branch comprising an organic group.

In one embodiment, in addition to the R' which already defined as glucose branching moiety, the R and the remaining R' comprises at least one first acyl group and at least one second acyl group.

In one embodiment, a poly alpha-1,6-glucan ester compound represented by Structure A as disclosed herein comprises poly alpha-1,6-glucan succinate, poly alpha-1,6-glucan methylsuccinate, poly alpha-1,6-glucan 2-methylene succinate, poly alpha-1,6-glucan maleate, poly alpha-1,6-glucan methylmaleate, poly alpha-1,6-glucan dimethyl maleate, poly alpha-1,6-glucan 2-ethyl-3-methyl maleate, poly alpha-1,6-glucan 2-hexyl-3-methyl maleate, poly alpha-1,6-glucan 2-ethyl-3-methylglutaconate, poly alpha-1,6-glucan 2-nonen-1-yl-succinate, poly alpha-1,6-glucan 2-octene-1-yl succinate, poly alpha-1,6-glucan benzoate, poly alpha-1,6-glucan acetyl benzoate, poly alpha-1,6-glucan glutarate, poly alpha-1,6-glucan laurate, or mixtures thereof.

Depending upon the desired application, compositions comprising a poly alpha-1,6-glucan ester compound as disclosed herein can be formulated, for example, blended, mixed, or incorporated into, with one or more other materials and/or active ingredients suitable for use in various compositions, for example compositions for use in laundry care, textile/fabric care, and/or personal care products. The term "composition comprising a poly alpha-1,6-glucan ester compound" in this context may include, for example, aqueous formulations, rheology modifying compositions, fabric treatment/care compositions, laundry care formulations/compositions or fabric softeners, dish care compositions each comprising a poly alpha-1,6-glucan ester compound as disclosed herein.

As used herein, the term "effective amount" refers to the amount of the substance used or administered that is suitable to achieve the desired effect. The effective amount of material may vary depending upon the application. One of skill in the art will typically be able to determine an effective amount for a particular application or subject without undo experimentation.

The term "resistance to enzymatic hydrolysis" refers to the relative stability of the polysaccharide derivative to enzymatic hydrolysis. Having a resistance to hydrolysis is important for the use of these materials in applications wherein enzymes are present, such as in detergent, fabric care, and/or laundry care applications. In some embodiments, the poly alpha-1,6-glucan ester compound is resistant to cellulases. In other embodiments, the poly alpha-1,6-glucan ester compound is resistant to proteases. In still further embodiments, the poly alpha-1,6-glucan ester compound is resistant to amylases. In yet other embodiments, the poly alpha-1,6-glucan ester is resistant to mannanases. In other embodiments, the poly alpha-1,6-glucan ester is resistant to multiple classes of enzymes, for example, two or more cellulases, proteases,

amylases, mannanases, or combinations thereof. Resistance to any particular enzyme will be defined as having at least 10, 20, 30, 40, 50, 60, 70, 80, 90, 95 or 100% of the materials remaining after treatment with the respective enzyme. The percentage remaining may be determined by measuring the supernatant after enzyme treatment using SEC-HPLC. The assay to measure enzyme resistance can be determined using the following procedure: A sample of the poly alpha-1,6-glucan ester compound is added to water in a vial and mixed using a PTFE magnetic stir bar to create a 1 percent by weight aqueous solution. The aqueous mixture is produced at pH 7.0 and 20°C. After the poly alpha-1,6-glucan ester compound thereof has completely dissolved, 1.0 milliliter (mL) (1 percent by weight of the enzyme formulation) of cellulase (PURADEX® EGL), amylase (PURASTAR® ST L) protease (SAVINASE® 16.0L), or lipase (Lipex® 100L) is added and mixed for 72 hours (hrs) at 20°C. After 72 hrs of stirring, the reaction mixture is heated to 70°C for 10 minutes to inactivate the added enzyme, and the resulting mixture is cooled to room temperature and centrifuged to remove any precipitate. The supernatant is analyzed by SEC-HPLC for recovered poly alpha-1,6-glucan ester compound and compared to a control where no enzyme was added to the reaction mixture. Percent changes in area counts for the respective poly alpha-1,6-glucan ester compound thereof may be used to test the relative resistance of the materials to the respective enzyme treatment. Percent changes in area versus the total will be used to assess the relative amount of materials remaining after treatment with a particular enzyme. Materials having a percent recovery of at least 10%, preferably at least 50, 60, 70, 80, 90, 95 or 100% will be considered "resistant" to the respective enzyme treatment.

The phrase "aqueous composition" herein refers to a solution or mixture in which the solvent is at least 1% by weight of water and which comprises the poly alpha-1,6-glucan ester.

The terms "hydrocolloid" and "hydrogel" are used interchangeably herein. A hydrocolloid refers to a colloid system in which water is the dispersion medium. A "colloid" herein refers to a substance that is microscopically dispersed throughout another substance. Therefore, a hydrocolloid herein can also refer to a dispersion, emulsion, mixture, or solution of the poly alpha-1,6-glucan ester compound in water or aqueous solution.

The term "aqueous solution" herein refers to a solution in which the solvent is water. The poly alpha-1,6-glucan ester compound can be dispersed, mixed, and/or dissolved in an aqueous solution. An aqueous solution can serve as the dispersion medium of a hydrocolloid herein.

The terms "dispersant" and "dispersion agent" are used interchangeably herein to refer to a material that promotes the formation and stabilization of a dispersion of one substance in another. A "dispersion" herein refers to an aqueous composition comprising one or more particles, for example, any ingredient of a household product that are scattered, or uniformly distributed, throughout the aqueous composition. It is believed that the poly alpha-1,6-glucan ester compound can act as dispersants in aqueous compositions disclosed herein.

The term "viscosity" as used herein refers to the measure of the extent to which a fluid or an aqueous composition such as a hydrocolloid resists a force tending to cause it to flow. Various units of viscosity that can be used herein include centipoise (cPs) and Pascal-second (Pa·s). A centipoise is one one-hundredth of a poise; one poise is equal to 0.100 $kg \cdot m^{-1} \cdot s^{-1}$. Thus, the terms "viscosity modifier" and "viscosity-modifying agent" as used herein refer to anything that can alter/modify the viscosity of a fluid or aqueous composition.

The terms "fabric", "textile", and "cloth" are used interchangeably herein to refer to a woven or non-woven material having a network of natural and/or artificial fibers. Such fibers can be thread or yarn, for example.

A "fabric care composition" herein is any composition suitable for treating fabric in some manner. Suitable examples of such a composition include non-laundering fiber treatments (for desizing, scouring, mercerizing, bleaching, coloration, dying, printing, bio-polishing, anti-microbial treatments, anti-wrinkle treatments, stain resistance treatments, etc.), laundry care compositions (e.g., laundry care detergents), and fabric softeners.

The terms "detergent composition", "heavy duty detergent" and "all-purpose detergent" are used interchangeably herein to refer to a composition useful for regular washing of a substrate, for example, dishware, cutlery, fabrics, white and colored textiles at any temperature. Detergent compositions for treating of fabrics and dishware, include: laundry detergents, fabric conditioners (including softeners), laundry and rinse additives and care compositions, fabric freshening compositions, laundry prewash, laundry pretreat, dishwashing compositions (including hand dishwashing and automatic dishwashing products). The composition may be a detergent composition, and the detergent composition typically comprises detersive surfactant.

The terms "cellulase" and "cellulase enzyme" are used interchangeably herein to refer to an enzyme that hydrolyzes β-1,4-D-glucosidic linkages in cellulose, thereby partially or completely degrading cellulose. Cellulase can alternatively be referred to as "β-1,4-glucanase", for example, and can have endocellulase activity (EC 3.2.1.4), exocellulase activity (EC 3.2.1.91), or cellobiase activity (EC 3.2.1.21). A cellulase in certain embodiments herein can also hydrolyze β-1,4-D-glucosidic linkages in cellulose ether derivatives such as carboxymethyl cellulose. "Cellulose" refers to an insoluble polysaccharide having a linear chain of β-1,4-linked D-glucose monomeric units.

As used herein, the term "fabric hand" or "handle" is meant people's tactile sensory response towards fabric which may be physical, physiological, psychological, social or any combination thereof. In some embodiments, the fabric hand may be measured using a PHABROMETER® System (available from Nu Cybertek, Inc. Davis, California) for measuring the relative hand value as given by the American Association of Textile Chemists and Colorists (AATCC test

method "202-2012, Relative Hand Value of Textiles: Instrumental Method").

The composition can be in the form of a liquid, a gel, a powder, a hydrocolloid, an aqueous solution, a granule, a tablet, a capsule, a single compartment sachet, a multi-compartment sachet, a single compartment pouch, or a multi-compartment pouch. In some embodiments, the composition is in the form of a liquid, a gel, a powder, a single compartment sachet, or a multi-compartment sachet.

A detergent composition can be used for hand wash, machine wash and/or other purposes such as soaking and/or pretreatment of fabrics, for example. A detergent composition may take the form of, for example, a laundry detergent; any wash-, rinse-, or dryer-added product; unit dose or spray. Detergent compositions in a liquid form may be in the form of an aqueous composition. In other embodiments, a detergent composition can be in a dry form such as a granular detergent or dryer-added sheet. Other non-limiting examples of detergent compositions can include: granular or powder-form all-purpose or heavy-duty washing agents; liquid, gel or paste-form all-purpose or heavy-duty washing agents; liquid or dry fine-fabric (e.g. delicates) detergents; cleaning auxiliaries such as bleach additives, "stain-stick", or pre-treatments; substrate-laden products such as dry and wetted wipes, pads, or sponges; sprays and mists; water-soluble unit dose articles.

The product formulation comprising the poly alpha-1,6-glucan ester compound described herein may be optionally diluted with water, or a solution predominantly comprised of water, to produce a formulation with the desired poly alpha-1,6-glucan ester compound concentration for the target application. Clearly one of skill in the art can adjust the reaction components and/or dilution amounts to achieve the desired poly alpha-1,6-glucan ester concentration for the chosen detergent product.

The composition can be in any useful form, for example, as powders, granules, pastes, bars, unit dose, or liquid.

The unit dose form may be water-soluble, for example, a water-soluble unit dose article comprising a water-soluble film and a liquid or solid laundry detergent composition, also referred to as a pouch. A water-soluble unit dose pouch comprises a water-soluble film which fully encloses the liquid or solid detergent composition in at least one compartment. The water-soluble unit dose article may comprise a single compartment or multiple compartments. The water-soluble unit dose article may comprise at least two compartments or at least three compartments. The compartments may be arranged in a superposed orientation or in a side-by-side orientation.

A unit dose article is typically a closed structure, made of the water-soluble film enclosing an internal volume which comprises the liquid or solid laundry detergent composition. The pouch can be of any form and shape which is suitable to hold and protect the composition, e.g. without allowing the release of the composition from the pouch prior to contact of the pouch to water.

A liquid detergent composition may be aqueous, typically containing up to 70% by weight of water and 0% to 30% by weight of organic solvent. It may also be in the form of a compact gel type containing less than or equal to 30% by weight water.

The poly alpha-1,6-glucan ester compounds disclosed herein can be used as an ingredient in the desired product or may be blended with one or more additional suitable ingredients and used as, for example fabric care applications and/or laundry care applications. Any of the disclosed compositions, for example, a fabric care or a laundry care composition can comprise in the range of 0.01 to 99 percent by weight of the poly alpha-1,6-glucan ester compound, based on the total dry weight of the composition (dry solids basis). The term "total dry weight" means the weight of the composition excluding any solvent, for example, any water that might be present. In other embodiments, the composition comprises 0.1 to 10% or 0.1 to 9% or 0.5 to 8% or 1 to 7% or 1 to 6% or 1 to 5% or 1 to 4% or 1 to 3% or 5 to 10% or 10 to 15% or 15 to 20% or 20 to 25% or 25 to 30% or 30 to 35% or 35 to 40% or 40 to 45% or 45 to 50% or 50 to 55% or 55 to 60% or 60 to 65% or 65 to 70% or 70 to 75% or 75 to 80% or 80 to 85% or 85 to 90% or 90 to 95% or 95 to 99% by weight of the poly alpha-1,6-glucan ester compound, wherein the percentages by weight are based on the total dry weight of the composition.

The composition can further comprise at least one of a surfactant, an enzyme, a detergent builder, a complexing agent, a polymer, a soil release polymer, a surfactancy-boosting polymer, a bleaching agent, a bleach activator, a bleaching catalyst, a fabric conditioner, a clay, a foam booster, a suds suppressor, an anti-corrosion agent, a soil-suspending agent, an anti-soil re-deposition agent, a dye, a bactericide, a tarnish inhibitor, an optical brightener, a perfume, a saturated or unsaturated fatty acid, a dye transfer inhibiting agent, a chelating agent, a hueing dye, a calcium cation, a magnesium cation, a visual signaling ingredient, an anti-foam, a structurant, a thickener, an anti-caking agent, a starch, sand, a gelling agents, or a combination thereof. In one embodiment, the enzyme is a cellulase. In another embodiment, the enzyme is a protease. In yet another embodiment, the enzyme is an amylase.

The composition can be a detergent composition useful for, for example, fabric care, laundry care and/or dish care and may further contain one or more active enzymes. Non-limiting examples of suitable enzymes include proteases, cellulases, hemicellulases, peroxidases, lipolytic enzymes (e.g., metallolipolytic enzymes), xylanases, phospholipases, perhydrolases, cutinases, pectinases, pectate lyases, mannanases, keratinases, reductases, oxidases (e.g., choline oxidase), phenoloxidases, lipoxygenases, ligninases, pullulanases, tannases, pentosanases, malanases, beta-glucanases, arabinosidases, hyaluronidases, chondroitinases, laccases, metalloproteinases, amadoriases, glucoamylases,

arabinofuranosidases, phytases, isomerases, transferases, amylases or a combination thereof. If an enzyme(s) is included, it may be present in the composition at 0.0001 to 0.1% by weight of the active enzyme, based on the total weight of the composition. In other embodiments, the enzyme can be present at 0.01 to 0.03% by weight of the active enzyme (e.g., calculated as pure enzyme protein) based on the total weight of the composition. In some embodiments, a combination of two or more enzymes can be used in the composition. In some embodiments, the two or more enzymes are cellulase and one or more of proteases, hemicellulases, peroxidases, lipolytic enzymes, xylanases, phospholipases, perhydrolases, cutinases, pectinases, pectate lyases, mannanases, keratinases, reductases, oxidases, phenoloxidases, lipoxygenases, ligninases, pullulanases, tannases, pentosanases, malanases, beta-glucanases, arabinosidases, hyaluronidases, chondroitinases, laccases, metalloproteinases, amadoriases, glucoamylases, arabinofuranosidases, phytases, isomerases, transferases, amylases or a combination thereof.

In some embodiments, the composition can comprise one or more enzymes, each enzyme present from 0.00001% to 10% by weight, based on the total weight of the composition. In some embodiments, the composition can also comprise each enzyme at a level of 0.0001% to 10%, 0.001% to 5%, 0.001% to 2% or 0.005% to 0.5% by weight, based on the total weight of the composition.

A cellulase can have endocellulase activity (EC 3.2.1.4), exocellulase activity (EC 3.2.1.91), or cellobiase activity (EC 3.2.1.21). A cellulase is an "active cellulase" having activity under suitable conditions for maintaining cellulase activity; it is within the skill of the art to determine such suitable conditions. Besides being able to degrade cellulose, a cellulase in certain embodiments can also degrade cellulose ether derivatives such as carboxymethyl cellulose.

The cellulase may be derived from any microbial source, such as a bacteria or fungus. Chemically-modified cellulases or protein-engineered mutant cellulases are included. Suitable cellulases include, for example, cellulases from the genera *Bacillus, Pseudomonas, Streptomyces, Trichoderma, Humicola, Fusarium, Thielavia* and *Acremonium*. As other examples, the cellulase may be derived from *Humicola insolens, Myceliophthora thermophile, Fusarium oxysporum, Trichoderma reesei* or a combination thereof. The cellulase, such as any of the foregoing, can be in a mature form lacking an N-terminal signal peptide. Commercially available cellulases useful herein include CELLUSOFT®, CELLUCLEAN®, CELLUZYME® and CAREZYME® (Novozymes A/S); CLAZINASE® and PURADAX® HA and REVITALENZ™ (DuPont Industrial Biosciences), BIOTOUCH® (AB Enzymes); and KAC-500(B)® (Kao Corporation).

Alternatively, a cellulase herein may be produced by any means known in the art, for example, a cellulase may be produced recombinantly in a heterologous expression system, such as a microbial or fungal heterologous expression system. Examples of heterologous expression systems include bacterial (e.g., *E. coli, Bacillus* sp.) and eukaryotic systems. Eukaryotic systems can employ yeast (e.g., *Pichia* sp., *Saccharomyces* sp.) or fungal (e.g., *Trichoderma* sp. such as *T. reesei, Aspergillus* species such as *A. niger)* expression systems, for example.

The cellulase in certain embodiments can be thermostable. Cellulase thermostability refers to the ability of the enzyme to retain activity after exposure to an elevated temperature (e.g. 60-70 °C) for a period of time (e.g., 30-60 minutes). The thermostability of a cellulase can be measured by its half-life (t1/2) given in minutes, hours, or days, during which time period half the cellulase activity is lost under defined conditions.

The cellulase in certain embodiments can be stable to a wide range of pH values (e.g. neutral or alkaline pH such as pH of ~7.0 to ~11.0). Such enzymes can remain stable for a predetermined period of time (e.g., at least 15 min., 30 min., or 1 hour) under such pH conditions.

At least one, two, or more cellulases may be included in the composition. The total amount of cellulase in a composition herein typically is an amount that is suitable for the purpose of using cellulase in the composition (an "effective amount"). For example, an effective amount of cellulase in a composition intended for improving the feel and/or appearance of a cellulose-containing fabric is an amount that produces measurable improvements in the feel of the fabric (e.g., improving fabric smoothness and/or appearance, removing pills and fibrils which tend to reduce fabric appearance sharpness). As another example, an effective amount of cellulase in a fabric stonewashing composition herein is that amount which will provide the desired effect (e.g., to produce a worn and faded look in seams and on fabric panels). The amount of cellulase in a composition herein can also depend on the process parameters in which the composition is employed (e.g., equipment, temperature, time, and the like) and cellulase activity, for example. The effective concentration of cellulase in an aqueous composition in which a fabric is treated can be readily determined by a skilled artisan. In fabric care processes, cellulase can be present in an aqueous composition (e.g., wash liquor) in which a fabric is treated in a concentration that is minimally 0.01-0.1 ppm total cellulase protein, or 0.1-10 ppb total cellulase protein (e.g., less than 1 ppm), to maximally 100, 200, 500, 1000, 2000, 3000, 4000, or 5000 ppm total cellulase protein, for example.

Suitable enzymes are known in the art and can include, for example, MAXATASE®, MAXACAL™, MAXAPEM™, OPTICLEAN®, OPTIMASE®, PROPERASE®, PURAFECT®, PURAFECT® OXP, PURAMAX™, EXCELLASE™, PREFERENZ™ proteases (e.g. P100, P110, P280), EFFECTENZ™ proteases (e.g. P1000, P1050, P2000), EXCELLENZ™ proteases (e.g. P1000), ULTIMASE®, and PURAFAST™ (Genencor); ALCALASE®, SAVINASE®, PRIMASE®, DURAZYM™, POLARZYME®, OVOZYME®, KANNASE®, LIQUANASE®, NEUTRASE®, RELASE® and ESPERASE® (Novozymes); BLAP™ and BLAP™ variants (Henkel Kommanditgesellschaft auf Aktien, Duesseldorf, Germany), and KAP (B.

alkalophilus subtilisin; Kao Corp., Tokyo, Japan) proteases; MANNASTAR®, PURABRITE™, and MANNAWAY® mannanases; M1 LIPASE™, LUMA FAST™, and LIPOMAX™ (Genencor); LIPEX®, LIPOLASE® and LIPOLASE® ULTRA (Novozymes); and LIPASE P™ "Amano" (Amano Pharmaceutical Co. Ltd., Japan) lipases; STAINZYME®, STAINZYME PLUS®, NATALASE®, DURAMYL®, TERMAMYL®, TERMAMYL ULTRA®, FUNGAMYL® and BAN™ (Novo Nordisk A/S and Novozymes A/S); RAPIDASE®, POWERASE®, PURASTAR® and PREFERENZ™ (DuPont Industrial Biosciences) amylases; GUARDZYME™ (Novo Nordisk A/S and Novozymes A/S) peroxidases or a combination thereof.

In some embodiments, the enzymes in the composition can be stabilized using conventional stabilizing agents, e.g., a polyol such as propylene glycol or glycerol; a sugar or sugar alcohol; lactic acid; boric acid or a boric acid derivative (e.g., an aromatic borate ester).

A detergent composition herein typically comprises one or more surfactants, wherein the surfactant is selected from nonionic surfactants, anionic surfactants, cationic surfactants, ampholytic surfactants, zwitterionic surfactants, semi-polar nonionic surfactants and mixtures thereof. The surfactant may be petroleum-derived (also referred to as synthetic) or non-petroleum-derived (also referred to as natural). In some embodiments, the surfactant is present at a level of from 0.1% to 60%, while in alternative embodiments the level is from 1% to 50%, while in still further embodiments the level is from 5% to 40%, by weight of the cleaning composition. A detergent will usually contain 0% to 50% by weight of an anionic surfactant such as linear alkylbenzenesulfonate (LAS), alpha-olefinsulfonate (AOS), alkyl sulfate (fatty alcohol sulfate) (AS), alcohol ethoxysulfate (AEOS or AES), secondary alkanesulfonates (SAS), alpha-sulfo fatty acid methyl esters, alkyl- or alkenylsuccinic acid, or soap.

The detergent composition may comprise an alcohol ethoxysulfate of the formula $R^1$-$(OCH_2CH_2)_x$-O-$SO_3M$, wherein $R^1$ is a non-petroleum derived, linear or branched fatty alcohol consisting of even numbered carbon chain lengths of from Cs to $C_{20}$, and wherein x is from 0.5 to 8, and where M is an alkali metal or ammonium cation. The fatty alcohol portion of the alcohol ethoxysulfate ($R^1$) is derived from a renewable source (e.g., animal or plant derived) rather than geologically derived (e.g., petroleum-derived). Fatty alcohols derived from a renewable source may be referred to as natural fatty alcohols. Natural fatty alcohols have an even number of carbon atoms with a single alcohol (-OH) attached to the terminal carbon. The fatty alcohol portion of the surfactant ($R^1$) may comprise distributions of even number carbon chains, e.g., C12, C14, C16, C18, and so forth.

In addition, a detergent composition may optionally contain 0 wt% to 40 wt% of a nonionic surfactant such as alcohol ethoxylate (AEO or AE), carboxylated alcohol ethoxylates, nonylphenol ethoxylate, alkylpolyglycoside, alkyldimethylamineoxide, ethoxylated fatty acid monoethanolamide, fatty acid monoethanolamide, or polyhydroxy alkyl fatty acid amide. The detergent composition may comprise an alcohol ethoxylate of formula $R^2$-$(OCH_2CH_2)_y$-OH, wherein $R^2$ is a non-petroleum derived, linear or branched fatty alcohol consisting of even numbered carbon chain lengths of from $C_{10}$ to $C_{18}$, and wherein y is from 0.5 to 15. The fatty alcohol portion of the alcohol ethoxylate ($R^2$) is derived from a renewable source (e.g., animal or plant derived) rather than geologically derived (e.g., petroleum-derived). The fatty alcohol portion of the surfactant ($R^2$) may comprise distributions of even number carbon chains, e.g., C12, C14, C16, C18, and so forth.

The composition can further comprise one or more detergent builders or builder systems. In some embodiments incorporating at least one builder, the compositions comprise at least 1%, from 3% to 60% or from 5% to 40% by weight of the builder, based on the total weight of the composition. Builders include, for example, the alkali metal, ammonium and/or alkanolammonium salts of polyphosphates, alkali metal silicates, alkaline earth and alkali metal carbonates, aluminosilicates, polycarboxylate compounds, ether hydroxypolycarboxylates, copolymers of maleic anhydride with ethylene or vinyl methyl ether, 1,3,5-trihydroxy benzene-2,4,6-trisulphonic acid, and carboxymethyloxysuccinic acid, the various alkali metal, ammonium and substituted ammonium salts of polyacetic acids such as ethylenediamine tetraacetic acid and nitrilotriacetic acid, as well as polycarboxylates such as mellitic acid, succinic acid, citric acid, oxydisuccinic acid, polymaleic acid, benzene 1,3,5-tricarboxylic acid, carboxymethyloxysuccinic acid, and soluble salts thereof. Examples of a detergent builder or complexing agent include zeolite, diphosphate, triphosphate, phosphonate, citrate, nitrilotriacetic acid (NTA), ethylenediaminetetraacetic acid (EDTA), diethylenetriaminepentaacetic acid (DTMPA), alkyl- or alkenylsuccinic acid, soluble silicates or layered silicates (e.g., SKS-6 from Hoechst). A detergent may also be unbuilt, i.e., essentially free of detergent builder.

The composition can further comprise at least one chelating agent. Suitable chelating agents include, for example, copper, iron and/or manganese chelating agents and mixtures thereof. In some embodiments in which at least one chelating agent is used, the compositions comprise from 0.1% to 15% or even from 3.0% to 10% by weight of the chelating agent, based on the total weight of the composition.

The composition can further comprise at least one deposition aid. Suitable deposition aids include, for example, polyethylene glycol, polypropylene glycol, polycarboxylate, soil release polymers such as polytelephthalic acid, clays such as kaolinite, montmorillonite, atapulgite, illite, bentonite, halloysite, or a combination thereof.

The composition can further comprise one or more dye transfer inhibiting agents. Suitable dye transfer inhibiting agents include, for example, polyvinylpyrrolidone polymers, polyamine N-oxide polymers, copolymers of N-vinylpyrrolidone and N-vinylimidazole, polyvinyloxazolidones, polyvinylimidazoles, manganese phthalocyanine, peroxidases, polyvinylpyrrolidone polymers, ethylene-diamine-tetraacetic acid (EDTA); diethylene triamine penta methylene phosphonic acid (DTPMP); hydroxy-ethane diphosphonic acid (HEDP); ethylenediamine N,N'-disuccinic acid (EDDS); methyl glycine diacetic acid (MGDA); diethylene triamine penta acetic acid (DTPA); propylene diamine tetraacetic acid (PDTA); 2-hydroxypyridine-N-oxide (HPNO); or methyl glycine diacetic acid (MGDA); glutamic acid N,N-diacetic acid (N,N-dicarboxymethyl glutamic acid tetrasodium salt (GLDA); nitrilotriacetic acid (NTA); 4,5-dihydroxy-m-benzenedisulfonic acid; citric acid and any salts thereof; N-hydroxyethylethylenediaminetri-acetic acid (HEDTA), triethylenetetraaminehexaacetic acid (TTHA), N-hydroxyethyliminodiacetic acid (HEIDA), dihydroxyethylglycine (DHEG), ethylenediaminetetrapropionic acid (EDTP) and derivatives thereof or a combination thereof. In embodiments in which at least one dye transfer inhibiting agent is used, the compositions can comprise from 0.0001% to 10%, from 0.01% to 5%, or even from 0.1% to 3% by weight of the dye transfer inhibiting agent, based on the total weight of the composition.

The composition can further comprise silicates. Suitable silicates can include, for example, sodium silicates, sodium disilicate, sodium metasilicate, crystalline phyllosilicates or a combination thereof. In some embodiments, silicates can be present at a level of from 1% to 20% by weight, based on the total weight of the composition. In other embodiments, silicates can be present at a level of from 5% to 15% by weight, based on the total weight of the composition.

The composition can further comprise dispersants. Suitable water-soluble organic materials can include, for example, homo- or co-polymeric acids or their salts, in which the polycarboxylic acid comprises at least two carboxyl radicals separated from each other by not more than two carbon atoms.

The composition can further comprise one or more other types of polymers in addition to the present poly alpha-1,6-glucan ester compounds. Examples of other types of polymers useful herein include carboxymethyl cellulose (CMC), poly(vinylpyrrolidone) (PVP), polyethylene glycol (PEG), poly(vinyl alcohol) (PVA), polycarboxylates such as polyacrylates, maleic/acrylic acid copolymers and lauryl methacrylate/acrylic acid copolymers.

The composition can further comprise a bleaching system. For example, the bleaching system can comprise an $H_2O_2$ source such as perborate, percarbonate, perhydrate salts, mono or tetra hydrate sodium salt of perborate, persulfate, perphosphate, persilicate, percarboxylic acids and salts, percarbonic acids and salts, perimidic acids and salts, peroxymonosulfuric acids and salts, sulfonated zinc phthalocyanines, sulfonated aluminum phthalocyanines, xanthene dyes which may be combined with a peracid-forming bleach activator such as, for example, dodecanoyl oxybenzene sulfonate, decanoyl oxybenzene sulfonate, decanoyl oxybenzoic acid or salts thereof, tetraacetylethylenediamine (TAED) or nonanoyloxybenzenesulfonate (NOBS). Alternatively, a bleaching system may comprise peroxyacids (e.g., amide, imide, or sulfone type peroxyacids). In other embodiments, the bleaching system can be an enzymatic bleaching system comprising perhydrolase. Combinations of any of the above may also be used.

The composition can further comprise conventional detergent ingredients such as fabric conditioners, clays, foam boosters, suds suppressors, anti-corrosion agents, soil-suspending agents, anti-soil redeposition agents, dyes, bactericides, tarnish inhibiters, optical brighteners, or perfumes. The pH of a detergent composition herein (measured in aqueous solution at use concentration) can be neutral or alkaline (e.g., pH of 7.0 to 11.0).

The composition can be a detergent composition and optionally, a heavy duty (all purpose) laundry detergent composition. In some embodiments, the detergent composition can comprise a detersive surfactant (10%-40% wt/wt), including an anionic detersive surfactant (selected from a group of linear or branched or random chain, substituted or unsubstituted alkyl sulphates, alkyl sulphonates, alkyl alkoxylated sulphate, alkyl phosphates, alkyl phosphonates, alkyl carboxylates, and/or mixtures thereof), and optionally non-ionic surfactant (selected from a group of linear or branched or random chain, substituted or unsubstituted alkyl alkoxylated alcohol, e.g., $C_8$-$C_{18}$ alkyl ethoxylated alcohols and/or $C_6$-$C_{12}$ alkyl phenol alkoxylates), where the weight ratio of anionic detersive surfactant (with a hydrophilic index (HIc) of from 6.0 to 9) to non-ionic detersive surfactant is greater than 1:1. Suitable detersive surfactants also include cationic detersive surfactants (selected from a group of alkyl pyridinium compounds, alkyl quaternary ammonium compounds, alkyl quaternary phosphonium compounds, alkyl ternary sulphonium compounds, and/or mixtures thereof); zwitterionic and/or amphoteric detersive surfactants (selected from a group of alkanolamine sulpho-betaines); ampholytic surfactants; semi-polar non-ionic surfactants and mixtures thereof.

The composition can be a detergent composition, optionally including, for example, a surfactancy boosting polymer consisting of amphiphilic alkoxylated grease cleaning polymers. Suitable amphiphilic alkoxylated grease cleaning polymers can include, for example, alkoxylated polymers having branched hydrophilic and hydrophobic properties, such as alkoxylated polyalkylenimines, random graft polymers comprising a hydrophilic backbone comprising monomers, for example, unsaturated $C_1$-$C_6$ carboxylic acids, ethers, alcohols, aldehydes, ketones, esters, sugar units, alkoxy units, maleic anhydride, saturated polyalcohols such as glycerol, and mixtures thereof; and hydrophobic side chain(s), for example, one or more $C_4$-$C_{25}$ alkyl groups, polypropylene, polybutylene, vinyl esters of saturated $C_1$-$C_6$ mono-carboxylic acids, $C_1$-$C_6$ alkyl esters of acrylic or methacrylic acid, and mixtures thereof.

Suitable heavy duty laundry detergent compositions can optionally include additional polymers such as soil release polymers (include anionically end-capped polyesters, for example SRP1, polymers comprising at least one monomer unit selected from saccharide, dicarboxylic acid, polyol and combinations thereof, in random or block configuration, ethylene terephthalate-based polymers and co-polymers thereof in random or block configuration, for example REPEL-O-TEX SF, SF-2 AND SRP6, TEXCARE SRA100, SRA300, SRN100, SRN170, SRN240, SRN300 AND SRN325,

MARLOQUEST SL), anti-redeposition polymers, include carboxylate polymers, such as polymers comprising at least one monomer selected from acrylic acid, maleic acid (or maleic anhydride), fumaric acid, itaconic acid, aconitic acid, mesaconic acid, citraconic acid, methylenemalonic acid, and any mixture thereof, vinylpyrrolidone homopolymer, and/or polyethylene glycol, molecular weight in the range of from 500 to 100,000 Daltons (Da); and polymeric carboxylate (such as maleate/acrylate random copolymer or polyacrylate homopolymer). If present, soil release polymers can be included at 0.1 to 10% by weight, based on the total weight of the composition.

The heavy duty laundry detergent composition can optionally further include saturated or unsaturated fatty acids, preferably saturated or unsaturated $C_{12}$-$C_{24}$ fatty acids; deposition aids, for example, polysaccharides, cellulosic polymers, poly diallyl dimethyl ammonium halides (DADMAC), and co-polymers of DADMAC with vinyl pyrrolidone, acrylamides, imidazoles, imidazolinium halides, and mixtures thereof, in random or block configuration, cationic guar gum, cationic starch, cationic polyacylamides or a combination thereof. If present, the fatty acids and/or the deposition aids can each be present at 0.1% to 10% by weight, based on the total weight of the composition.

The detergent composition may optionally include silicone or fatty-acid based suds suppressors; hueing dyes, calcium and magnesium cations, visual signaling ingredients, anti-foam (0.001% to 4.0% by weight, based on the total weight of the composition), and/or a structurant/thickener (0.01% to 5% by weight, based on the total weight of the composition) selected from the group consisting of diglycerides and triglycerides, ethylene glycol distearate, microcrystalline cellulose, microfiber cellulose, biopolymers, xanthan gum, gellan gum, and mixtures thereof).

The compositions disclosed herein can be in the form of a dishwashing detergent composition. Examples of dishwashing detergents include automatic dishwashing detergents (typically used in dishwasher machines) and hand-washing dish detergents. A dishwashing detergent composition can be in any dry or liquid/aqueous form as disclosed herein, for example. Components that may be included in certain embodiments of a dishwashing detergent composition include, for example, one or more of a phosphate; oxygen- or chlorine-based bleaching agent; non-ionic surfactant; alkaline salt (e.g., metasilicates, alkali metal hydroxides, sodium carbonate); any active enzyme disclosed herein; anti-corrosion agent (e.g., sodium silicate); anti-foaming agent; additives to slow down the removal of glaze and patterns from ceramics; perfume; anti-caking agent (in granular detergent); starch (in tablet-based detergents); gelling agent (in liquid/gel based detergents); and/or sand (powdered detergents).

In addition to the polysaccharide derivative, dishwashing detergent compositions can comprise (i) a non-ionic surfactant, including any ethoxylated non-ionic surfactant, alcohol alkoxylated surfactant, epoxy-capped poly(oxyalkylated) alcohol, or amine oxide surfactant present in an amount from 0 to 10% by weight; (ii) a builder, in the range of 5 to 60% by weight, including any phosphate builder (e.g., mono-phosphates, di-phosphates, tri-polyphosphates, other oligomeric-polyphosphates, sodium tripolyphosphate-STPP), any phosphate-free builder (e.g., amino acid-based compounds including methyl-glycine-diacetic acid [MGDA] and salts or derivatives thereof, glutamic-N,N-diacetic acid [GLDA] and salts or derivatives thereof, iminodisuccinic acid (IDS) and salts or derivatives thereof, carboxy methyl inulin and salts or derivatives thereof, nitrilotriacetic acid [NTA], diethylene triamine penta acetic acid [DTPA], B-alaninediacetic acid [B-ADA] and salts thereof), homopolymers and copolymers of poly-carboxylic acids and partially or completely neutralized salts thereof, monomeric polycarboxylic acids and hydroxycarboxylic acids and salts thereof in the range of 0.5 to 50% by weight, or sulfonated/carboxylated polymers in the range of 0.1% to 50% by weight; (iii) a drying aid in the range of 0.1% to 10% by weight (e.g., polyesters, especially anionic polyesters, optionally together with further monomers with 3 to 6 functionalities, for example, acid, alcohol or ester functionalities which are conducive to polycondensation, polycarbonate-, polyurethane- and/or polyurea-polyorganosiloxane compounds or precursor compounds thereof, particularly of the reactive cyclic carbonate and urea type); (iv) a silicate in the range from 1% to 20% by weight (e.g., sodium or potassium silicates such as sodium disilicate, sodium meta-silicate and crystalline phyllosilicates); (v) an inorganic bleach (e.g., perhydrate salts such as perborate, percarbonate, perphosphate, persulfate and persilicate salts) and/or an organic bleach, for example, organic peroxyacids such as diacyl- and tetraacylperoxides, especially diperoxydodecanedioic acid, diperoxytetradecanedioic acid, and diperoxyhexadecanedioic acid; (vi) a bleach activator, for example, organic peracid precursors in the range from 0.1% to 10% by weight and/or bleach catalyst (e.g., manganese triazacyclononane and related complexes; Co, Cu, Mn, and Fe bispyridylamine and related complexes; and pentamine acetate cobalt(III) and related complexes); (vii) a metal care agent in the range from 0.1% to 5% by weight, for example, benzatriazoles, metal salts and complexes, and/or silicates; and/or (viii) any active enzyme disclosed herein in the range from 0.01 to 5.0 mg of active enzyme per gram of automatic dishwashing detergent composition, and an enzyme stabilizer component. The percentages by weight are based on the total weight of the composition.

In one embodiment, the method of treating the substrate can impart anti-greying properties to the substrate, by which is meant that soil which is detached from a fabric during washing of the fabric is suspended in the wash liquor and thus prevented from being redeposited on the fabric. In another embodiment, the method of treating the substrate can impart anti-redeposition properties to a substrate. The effectiveness of anti-greying and anti-redeposition agents can be determined with the use of a tergotometer and multiple washings of pre-soiled fabrics in the presence of initially clean fabrics which act as redeposition monitors, for example using methods known in the art.

The treatment provides a benefit to the substrate, for example, one or more of improved fabric hand, improved

resistance to soil deposition, improved colorfastness, improved wear resistance, improved wrinkle resistance, improved antifungal activity, improved stain resistance, improved cleaning performance when laundered, improved drying rates, improved dye, pigment or lake update, improved whiteness retention, or a combination thereof. In another embodiment, the substrate can be a surface, for example a wall, a floor, a door, or a panel, or paper, or the substrate can be a surface of an object, such as a table. The treatment provides a benefit to the substrate, for example improved resistance to soil deposition, improved stain resistance, improved cleaning performance, or a combination thereof.

A fabric herein can comprise natural fibers, synthetic fibers, semi-synthetic fibers, or any combination thereof. A semi-synthetic fiber is produced using naturally occurring material that has been chemically derivatized, an example of which is rayon. Non-limiting examples of fabric types herein include fabrics made of (i) cellulosic fibers such as cotton (e.g., broadcloth, canvas, chambray, chenille, chintz, corduroy, cretonne, damask, denim, flannel, gingham, jacquard, knit, matelassé, oxford, percale, poplin, plissé, sateen, seersucker, sheers, terry cloth, twill, velvet), rayon (e.g., viscose, modal, lyocell), linen, and TENCEL®; (ii) proteinaceous fibers such as silk, wool and related mammalian fibers; (iii) synthetic fibers such as polyester, acrylic, nylon, and the like; (iv) long vegetable fibers from jute, flax, ramie, coir, kapok, sisal, henequen, abaca, hemp and sunn; and (v) any combination of a fabric of (i)-(iv). Fabric comprising a combination of fiber types (e.g., natural and synthetic) includes those with both a cotton fiber and polyester, for example. Materials/articles containing one or more fabrics include, for example, clothing, curtains, drapes, upholstery, carpeting, bed linens, bath linens, tablecloths, sleeping bags, tents, car interiors, etc. Other materials comprising natural and/or synthetic fibers include, for example, non-woven fabrics, paddings, paper, and foams. Fabrics are typically of woven or knit construction.

The step of contacting can be performed at a variety of conditions, for example, times, temperatures, wash/rinse volumes. Methods for contacting a fabric or textile substrate, for example, a fabric care method or laundry method are generally well known. For example, a material comprising fabric can be contacted with the disclosed composition: (i) for at least 5, 10, 20, 30, 40, 50, 60, 70, 80, 90, 100, 110, or 120 minutes; (ii) at a temperature of at least 10, 15, 20, 25, 30, 35, 40, 45, 50, 55, 60, 65, 70, 75, 80, 85, 90, or 95°C (e.g., for laundry wash or rinse: a "cold" temperature of 15-30°C, a "warm" temperature of 30-50°C, a "hot" temperature of 50-95°C); (iii) at a pH of 2, 3, 4, 5, 6, 7, 8, 9, 10, 11, or 12 (e.g., pH range of 2-12, or 3-11); (iv) at a salt (e.g., NaCl) concentration of at least 0.5, 1.0, 1.5, 2.0, 2.5, 3.0, 3.5, or 4.0% by weight; or any combination of (i)-(iv). The contacting step in a fabric care method or laundry method can comprise any of washing, soaking, and/or rinsing steps, for example. In some embodiments, the rinsing step is a step of rinsing with water.

Other substrates that can be contacted include, for example, surfaces that can be treated with a dish detergent (e.g., automatic dishwashing detergent or hand dish detergent). Examples of such materials include surfaces of dishes, glasses, pots, pans, baking dishes, utensils and flatware made from ceramic material, china, metal, glass, plastic (e.g., polyethylene, polypropylene, and polystyrene) and wood (collectively referred to herein as "tableware"). Examples of conditions (e.g., time, temperature, wash volume) for conducting a dishwashing or tableware washing method are known in the art. In other examples, a tableware article can be contacted with the composition herein under a suitable set of conditions such as any of those disclosed above with regard to contacting a fabric-comprising material.

Certain embodiments of a method of treating a substrate further comprise a drying step, in which a material is dried after being contacted with the composition. The drying step can be performed directly after the contacting step, or following one or more additional steps that might follow the contacting step, for example, drying of a fabric after being rinsed, in water for example, following a wash in an aqueous composition. Drying can be performed by any of several means known in the art, such as air drying at a temperature of at least 30, 40, 50, 60, 70, 80, 90, 100, 120, 140, 160, 170, 175, 180, or 200°C, for example. A material that has been dried herein typically has less than 3, 2, 1, 0.5, or 0.1 wt% water comprised therein.

The treatment provides a benefit to the substrate, for example improved resistance to soil deposition, improved stain resistance, improved cleaning performance, or a combination thereof. The step of contacting can include wiping or spraying the substrate with the composition.

Laundry care and dish care compositions are typically suitable for: (a) the care of finished textiles, cleaning of finished textiles, sanitization of finished textiles, disinfection of finished textiles, detergents, stain removers, softeners, fabric enhancers, stain removal or finished textiles treatments, pre and post wash treatments, washing machine cleaning and maintenance, with finished textiles intended to include garments and items made of cloth; (b) the care of dishes, glasses, crockery, cooking pots, pans, utensils, cutlery and the like in automatic, in-machine washing, including detergents, preparatory post treatment and machine cleaning and maintenance products for both the dishwasher, the utilized water and its contents; or (c) manual hand dish washing detergents.

The following example formulations are suitable for the present invention:
The following are illustrative examples of cleaning compositions according to the present disclosure and are not intended to be limiting.

Examples 1-7: Heavy Duty Liquid laundry detergent compositions.

| Ingredients | 1 | 2 | 3 | 4 | 5 | 6 | 7 |
|---|---|---|---|---|---|---|---|
| | % weight | | | | | | |
| $AE_{1.8}S$ | 6.77 | 5.16 | 1.36 | 1.30 | - | - | - |
| $AE_3S$ | - | - | - | - | 0.45 | - | - |
| LAS | 0.86 | 2.06 | 2.72 | 0.68 | 0.95 | 1.56 | 3.55 |
| HSAS | 1.85 | 2.63 | 1.02 | - | - | - | - |
| AE9 | 6.32 | 9.85 | 10.20 | 7.92 | | | |
| AE8 | | | | | | | 35.45 |
| AE7 | | | | | 8.40 | 12.44 | |
| $C_{12-14}$ dimethyl Amine Oxide | 0.30 | 0.73 | 0.23 | 0.37 | - | - | - |
| $C_{12-18}$ Fatty Acid | 0.80 | 1.90 | 0.60 | 0.99 | 1.20 | - | 15.00 |
| Citric Acid | 2.50 | 3.96 | 1.88 | 1.98 | 0.90 | 2.50 | 0.60 |
| Optical Brightener 1 | 1.00 | 0.80 | 0.10 | 0.30 | 0.05 | 0.50 | 0.001 |
| Optical Brightener 3 | 0.001 | 0.05 | 0.01 | 0.20 | 0.50 | - | 1.00 |
| Sodium formate | 1.60 | 0.09 | 1.20 | 0.04 | 1.60 | 1.20 | 0.20 |
| DTI | 0.32 | 0.05 | - | 0.60 | - | 0.60 | 0.01 |
| Sodium hydroxide | 2.30 | 3.80 | 1.70 | 1.90 | 1.70 | 2.50 | 2.30 |
| Monoethanolamine | 1.40 | 1.49 | 1.00 | 0.70 | - | - | - |
| Diethylene glycol | 5.50 | - | 4.10 | - | - | - | - |
| Chelant 1 | 0.15 | 0.15 | 0.11 | 0.07 | 0.50 | 0.11 | 0.80 |
| 4-formyl-phenylboronic acid | - | - | - | - | 0.05 | 0.02 | 0.01 |
| Sodium tetraborate | 1.43 | 1.50 | 1.10 | 0.75 | - | 1.07 | - |
| Ethanol | 1.54 | 1.77 | 1.15 | 0.89 | - | 3.00 | 7.00 |
| Polymer 1 | 0.10 | - | - | - | - | - | 2.00 |
| Polymer 2 | 0.30 | 0.33 | 0.23 | 0.17 | - | - | - |
| Polymer 3 | - | - | - | - | - | - | 0.80 |
| Polymer 4 | 0.80 | 0.81 | 0.60 | 0.40 | 1.00 | 1.00 | - |
| Polymer 5 (polyglucans) | 0.50 | 1.00 | 2.00 | 2.50 | 3.00 | 2.50 | 1.50 |
| 1,2-Propanediol | - | 6.60 | - | 3.30 | 0.50 | 2.00 | 8.00 |
| Structurant | 0.10 | - | - | - | - | - | 0.10 |
| Perfume | 1.60 | 1.10 | 1.00 | 0.80 | 0.90 | 1.50 | 1.60 |
| Perfume encapsulate | 0.10 | 0.05 | 0.01 | 0.02 | 0.10 | 0.05 | 0.10 |
| Protease | 0.80 | 0.60 | 0.70 | 0.90 | 0.70 | 0.60 | 1.50 |
| Mannanase | 0.07 | 0.05 | 0.045 | 0.06 | 0.04 | 0.045 | 0.10 |
| Amylase 1 | 0.30 | - | 0.30 | 0.10 | - | 0.40 | 0.10 |
| Amylase 2 | - | 0.20 | 0.10 | 0.15 | 0.07 | - | 0.10 |
| Xyloglucanase | 0.20 | 0.10 | - | - | 0.05 | 0.05 | 0.20 |
| Lipase | 0.40 | 0.20 | 0.30 | 0.10 | 0.20 | - | - |
| Polishing enzyme | - | 0.04 | - | - | - | 0.004 | - |
| Nuclease | 0.05 | - | - | - | - | - | 0.003 |
| Dispersin B | - | - | - | 0.05 | 0.03 | 0.001 | 0.001 |

(continued)

| Ingredients | 1 | 2 | 3 | 4 | 5 | 6 | 7 |
|---|---|---|---|---|---|---|---|
| | % weight | | | | | | |
| Liquitint® V200 | 0.01 | - | - | - | - | - | 0.005 |
| Leuco colorant | 0.05 | 0.035 | 0.01 | 0.02 | 0.004 | 0.002 | 0.004 |
| Dye control agent | - | 0.3 | - | 0.03 | - | 0.3 | 0.3 |
| Water, dyes & minors | Balance | | | | | | |
| pH | 8.2 | | | | | | |

Based on total cleaning and/or treatment composition weight. Enzyme levels are reported as raw material.

| | |
|---|---|
| AE1.8S | is $C_{12-15}$ alkyl ethoxy (1.8) sulfate |
| AE3S | is $C_{12-15}$ alkyl ethoxy (3) sulfate |
| AE7 | is $C_{12-13}$ alcohol ethoxylate, with an average degree of ethoxylation of 7 |
| AE8 | is $C_{12-13}$ alcohol ethoxylate, with an average degree of ethoxylation of 8 |
| AE9 | is $C_{12-13}$ alcohol ethoxylate, with an average degree of ethoxylation of 9 |
| Amylase 1 | is Stainzyme®, 15 mg active/g, supplied by Novozymes |
| Amylase 2 | is Natalase®, 29 mg active/g, supplied by Novozymes |
| Xyloglucanase | is Whitezyme®, 20mg active/g, supplied by Novozymes |
| Chelant 1 | is diethylene triamine pentaacetic acid |
| Chelant 2 | is 1-hydroxyethane 1,1-diphosphonic acid |
| Dispersin B | is a glycoside hydrolase, reported as 1000mg active/g |
| DTI | is either poly(4-vinylpyridine-1-oxide) (such as Chromabond S-403E®), or poly(1-vinylpyrrolidone-co-1-vinylimidazole) (such as Sokalan HP56®). |
| Dye control agent | Dye control agent in accordance with the invention, for example Suparex® O.IN (M1), Nylofixan® P (M2), Nylofixan® PM (M3), or Nylofixan® HF (M4) |
| HSAS | is mid-branched alkyl sulfate as disclosed in US 6,020,303 and US6,060,443 |
| LAS | is linear alkylbenzenesulfonate having an average aliphatic carbon chain length $C_9$-$C_{15}$ (HLAS is acid form). |
| Leuco colorant | Any suitable leuco colorant or mixtures thereof according to the instant invention. |
| Lipase | is Lipex®, 18 mg active/g, supplied by Novozymes |
| Liquitint® V200 | is a thiophene azo dye provided by Milliken |
| Mannanase | is Mannaway®, 25 mg active/g, supplied by Novozymes |
| Nuclease | is a Phosphodiesterase SEQ ID NO 1, reported as 1000mg active/g |
| Optical Brightener 1 | is disodium 4,4'-bis{[4-anilino-6-morpholino-s-triazin-2-yl]-amino}-2,2'-stilbenedisulfonate |
| Optical Brightener 3 | is Optiblanc SPL10® from 3V Sigma |
| Perfume encapsulate | is a core-shell melamine formaldehyde perfume microcapsules. |
| Polishing enzyme | is Para-nitrobenzyl esterase, reported as 1000mg active/g |
| Polymer 1 | is $bis((C_2H_5O)(C_2H_4O)n)(CH_3)-N^+-C_xH_{2x}-N^+-(CH_3)-bis((C_2H_5O)(C_2H_4O)n)$, wherein n = 20-30,x = 3 to 8 or sulphated or sulfonated variants thereof |
| Polymer 2 | is ethoxylated ($EO_{15}$) tetraethylene pentamine |
| Polymer 3 | is ethoxylated polyethylenimine |
| Polymer 4 | is ethoxylated hexamethylene diamine |
| Polymer 5 | is modified polyglucans of this invention |
| Protease | is Purafect Prime®, 40.6 mg active/g, supplied by DuPont |
| Structurant | is Hydrogenated Castor Oil |

The following is a suitable water-soluble unit dose formulation. The composition can be part of a single chamber water soluble unit dose article or can be split over multiple compartments resulting in below "averaged across compartments" full article composition.

| ***Ingredients*** | Composition 1 (wt%) |
|---|---|
| Fatty alcohol ethoxylate non-ionic surfactant, $C_{12-14}$ average degree of ethoxylation of 7 | 3.8 |
| Lutensol XL100 | 0.5 |
| Linear $C_{11-14}$ alkylbenzene sulphonate | 24.6 |
| AE3S Ethoxylated alkyl sulphate with an average degree of ethoxylation of 3 | 12.5 |
| Citric acid | 0.7 |
| Palm Kernel Fatty acid | 5.3 |
| Nuclease enzyme (wt% active protein) | 0.01 |
| Protease enzyme (wt% active protein) | 0.07 |
| Amylase enzyme (wt% active protein) | 0.005 |
| Xyloglucanese enzyme (wt% active protein) | 0.005 |
| Mannanase enzyme (wt% active protein) | 0.003 |
| Ethoxylated polyethyleneimine | 1.6 |
| Amphiphilic graft copolymer | 2.6 |
| Zwitterionic polyamine | 1.8 |
| Polyglucan of the present invention | 5.0 |
| Anionic polyester terephthalate | 0.6 |
| HEDP | 2.2 |
| Brightener 49 | 0.4 |
| Silicone anti-foam | 0.3 |
| Hueing dye | 0.05 |
| 1,2 PropaneDiol | 12.3 |
| Glycerine | 4.7 |
| DPG (DiPropyleneGlycol) | 1.7 |
| TPG (TriPropyleneGlycol) | 0.1 |
| Sorbitol | 0.1 |
| Monoethanolamine | 10.2 |
| K2SO3 | 0.4 |
| MgCl2 | 0.3 |
| water | 10.8 |
| Hydrogenated castor oil | 0.1 |
| Perfume | 2.1 |
| Aesthetic dye & Minors | Balance to 100 |
| pH (10% product concentration in demineralized water at 20°C) | 7.4 |

Solid free-flowing particulate laundry detergent composition examples:

| **Ingredient** | **Amount (in wt%)** |
|---|---|
| **Anionic detersive surfactant** (such as alkyl benzene sulphonate, alkyl ethoxylated sulphate and mixtures thereof) | from 8wt% to 15wt% |
| **Non-ionic detersive surfactant** (such as alkyl ethoxylated alcohol) | from 0.1wt% to 4wt% |
| **Cationic detersive surfactant** (such as quaternary ammonium compounds) | from Owt% to 4wt% |

(continued)

| Ingredient | Amount (in wt%) |
|---|---|
| **Other detersive surfactant** (such as zwiterionic detersive surfactants, amphoteric surfactants and mixtures thereof) | from Owt% to 4wt% |
| **Carboxylate polymer** (such as co-polymers of maleic acid and acrylic acid and/or carboxylate polymers comprising ether moieties and sulfonate moieties) | from 0.1wt% to 4wt% |
| **Polyethylene glycol polymer** (such as a polyethylene glycol polymer comprising polyvinyl acetate side chains) | from 0wt% to 4wt% |
| **Polyester soil release polymer** (such as Repel-o-tex and/or Texcare polymers) | from 0wt% to 2wt% |
| **Cellulosic polymer** (such as carboxymethyl cellulose, methyl cellulose and combinations thereof) | from 0.5wt% to 2wt% |
| **Polyglucan of the present invention** | From 0.1wt% to 8wt% |
| **Other polymer** (such as care polymers) | from 0wt% to 4wt% |
| **Zeolite builder and phosphate builder** (such as zeolite 4A and/or sodium tripolyphosphate) | from 0wt% to 4wt% |
| **Other co-builder** (such as sodium citrate and/or citric acid) | from 0wt% to 3wt% |
| **Carbonate salt** (such as sodium carbonate and/or sodium bicarbonate) | from 0wt% to 20wt% |
| **Silicate salt** (such as sodium silicate) | from 0wt% to 10wt% |
| **Filler** (such as sodium sulphate and/or bio-fillers) | from 10wt% to 70wt% |
| **Source of hydrogen peroxide** (such as sodium percarbonate) | from 0wt% to 20wt% |
| **Bleach activator** (such as tetraacetylethylene diamine (TAED) and/or nonanoyloxybenzenesulphonate (NOBS)) | from 0wt% to 8wt% |
| **Bleach catalyst** (such as oxaziridinium-based bleach catalyst and/or transition metal bleach catalyst) | from 0wt% to 0.1wt% |
| **Other bleach** (such as reducing bleach and/or pre-formed peracid) | from 0wt% to 10wt% |
| **Photobleach** (such as zinc and/or aluminium sulphonated phthalocyanine) | from 0wt% to 0.1wt% |
| **Chelant** (such as ethylenediamine-N'N'-disuccinic acid (EDDS) and/or hydroxyethane diphosphonic acid (HEDP)) | from 0.2wt% to 1wt% |
| **Hueing agent** (such as direct violet 9, 66, 99, acid red 50, solvent violet 13 and any combination thereof) | from 0wt% to 1wt% |
| **Brightener** (C.I. fluorescent brightener 260 or C.I. fluorescent brightener 351) | from 0.1wt% to 0.4wt% |
| **Protease** (such as Savinase, Savinase Ultra, Purafect, FN3, FN4 and any combination thereof) | from 0.1wt% to 0.4wt% |
| **Amylase** (such as Termamyl, Termamyl ultra, Natalase, Optisize, Stainzyme, Stainzyme Plus and any combination thereof) | from 0wt% to 0.2wt% |
| **Cellulase** (such as Carezyme and/or Celluclean) | from 0wt% to 0.2wt% |
| **Lipase** (such as Lipex, Lipolex, Lipoclean and any combination thereof) | from 0wt% to 1wt% |
| **Other enzyme** (such as xyloglucanase, cutinase, pectate lyase, mannanase, bleaching enzyme) | from 0wt% to 2wt% |
| **Fabric softener** (such as montmorillonite clay and/or polydimethylsiloxane (PDMS)) | from 0wt% to 15wt% |
| **Flocculant** (such as polyethylene oxide) | from 0wt% to 1wt% |
| **Suds suppressor** (such as silicone and/or fatty acid) | from 0wt% to 4wt% |
| **Perfume** (such as perfume microcapsule, spray-on perfume, starch encapsulated perfume accords, perfume loaded zeolite, and any combination thereof) | from 0.1wt% to 1wt% |
| **Aesthetics** (such as coloured soap rings and/or coloured speckles/noodles) | from 0wt% to 1wt% |

(continued)

| Ingredient | Amount (in wt%) |
|---|---|
| **Miscellaneous** | balance to 100wt% |

EXAMPLES

Unless otherwise stated, all ingredients are available from Sigma-Aldrich, St. Louis, Missouri and were used as received.

As used herein, "Comp. Ex." Means Comparative Example; "Ex." means Example; "std dev" means standard deviation; "g" means gram(s); "mL" means milliliter(s); "uL" means microliter(s); "wt" means weight; "L" means liter(s); "min" means minute(s); "kDa" means kilodaltons; "PES" means polyethersulfone.

**Method for Determining Anomeric Linkages by NMR Spectroscopy**

Glycosidic linkages in water soluble oligosaccharides and polysaccharide products synthesized by a glucosyltransferase GTF8117 and alpha-1,2 branching enzyme were determined by $^1$H NMR (Nuclear Magnetic Resonance Spectroscopy). Dry oligosaccharide/polysaccharide polymer (6 mg to 8 mg) was dissolved in a solution of 0.7 mL of 1 mM DSS (4,4-dimethyl-4-silapentane-1-sulfonic acid; NMR reference standard) in $D_2O$. The sample was stirred at ambient temperature overnight. 525 uL of the clear homogeneous solution was transferred to a 5 mm NMR tube. 2D $^1$H,$^{13}$C homo/hetero-nuclear suite of NMR experiments were used to identify AGU (anhydroglucose unit) linkages. The data were collected at 20 °C and processed on a Bruker Avance III NMR spectrometer, operating at either 500 MHz or 600 MHz. The systems are equipped with a proton optimized, helium cooled cryoprobe. The 1D $^1$H NMR spectrum was used to quantify glycosidic linkage distribution and finds the polysaccharide backbone as primarily alpha-1,6. The results reflect the ratio of the integrated intensity of a NMR resonance representing an individual linkage type divided by the integrated intensity of the sum of all peaks which represent glucose linkages, multiplied by 100.

**Biodegradation Test Method**

The biodegradability of the polysaccharide derivative was determined following the OECD 301B Ready Biodegradability $CO_2$ Evolution Test Guideline. In this study, the test substance is the sole carbon and energy source and under aerobic conditions microorganisms metabolize the test substance producing $CO_2$ or incorporating the carbon into biomass. The amount of $CO_2$ produced by the test substance (corrected for the $CO_2$ evolved by the blank inoculum) is expressed as a percentage of the theoretical amount of $CO_2$ ($ThCO_2$) that could have been produced if the organic carbon in the test substance was completely converted to $CO_2$.

**Method for evaluating whiteness benefit of polymers (method A)**

Whiteness maintenance, also referred to as whiteness preservation, is the ability of a detergent to keep white items from whiteness loss when they are washed in the presence of soils. White garments can become dirty/dingy looking over time when soils are removed from dirty clothes and suspended in the wash water, then these soils can re-deposit onto clothing, making the clothing less white each time they are washed.

The whiteness benefit of polymers of the present disclosure is evaluated using automatic Tergotometer with 10 pots for laundry formulation testing.

SBL2004 test soil strips supplied by WFK Testgewebe GmbH are used to simulate consumer soil levels (mix of body soil, food, dirt, grass etc.). On average, every 1 SBL2004 strip is loaded with 8g soil. The SBL2004 test soil strips were cut into 5x5 cm squares for use in the test.

White Fabric swatches of **Table 1** below purchased from WFK Testgewebe GmbH are used as whiteness tracers. Before wash test, L, a, b values of all whiteness tracers are measured using Konica Minolta CM-3610D spectrophotometer.

**Table 1.**

| Code | Fiber Content | % Fiber Content | Fabric Construction | Size | WFK Code |
|---|---|---|---|---|---|
| CK | Cotton | 100 | Weft Knit | (5 x 5 cm) | 19502_5x5_stamped |
| PC | Polyester/cotton | 65/35 | Weave | (5 x 5 cm) | 19503_5x5_stamped |
| PE | Polyester | 100 | Weft Knit | (5 x 5 cm) | 19508_5x5_stamped |

(continued)

| Code | Fiber Content | % Fiber Content | Fabric Construction | Size | WFK Code |
|---|---|---|---|---|---|
| PS | Polyester/Spandex | 95/5 | Weft Knit | (5 x 5 cm) | 19507_5x5_stamped |

Additional ballast (background fabric swatches) are also used to simulate a fabric load and provide mechanical energy during the real laundry process. Ballast loads are comprised of cotton and polycotton knit swatches at 5x5 cm size. 4 cycles of wash are needed to complete the test:

**Cycle 1**: desired amount of base detergent are fully dissolved by mixing with 1L water (at defined hardness) in each Tergotometer port. 60 grams of Whiteness tracers (internal replicate, including 4 types), 21 pieces 5x5 cm SBL2004, and ballast are washed and rinsed in the Tergotometer pot under defined conditions, then dried.

**Cycle 2:** The whiteness tracers and ballast from each pot are then washed and rinsed again together with a new set of SBL2004 (5x5cm, 21 pieces) follow the process of cycle 1. All other conditions remain same as cycle 1.

**Cycle 3:** The whiteness tracers and ballast from each pot are then washed and rinsed again together with a new set of SBL2004 (5x5cm, 21 pieces) follow the process of cycle 1. All other conditions remain same as cycle 1.

**Cycle 4:** The whiteness tracers and ballast from each port are then washed and rinsed again together with a new set of SBL2004 (5x5cm, 21 pieces) follow the process of cycle 1. All other conditions remain same as cycle 1.

After Cycle 4, all whiteness tracers & ballast are tumbled dried between 60-65°C until dry, the tracers are then measured again using Konica Minolta CM-3610D spectrophotometer. The changes in Whiteness Index (ΔWI(CIE)) are calculated based on L, a, b measure before and after wash.

$$\Delta WI(CIE) = WI(CIE)(after\ wash) - WI(CIE)(before\ wash).$$

**Method for evaluating whiteness performance of polymers (Method B)**

Whiteness maintenance, also referred to as whiteness preservation, is the ability of a detergent to keep white items from whiteness loss when they are washed in the presence of soils. White garments can become dirty/dingy looking over time when soils are removed from dirty clothes and suspended in the wash water, then these soils can re-deposit onto clothing, making the clothing less white each time they are washed. The whiteness benefit of polymers as presently disclosed is evaluated using automatic Miniwasher with 5 pots. SBL2004 test soil stips supplied by WFKTestgewebe GmbH are used to simulate consumer soil levels (mix of body soil, food, dirt, grass etc.). On average, every 1 SBL2004 strip is loaded with 8g soil. White Fabric swatches of **Table 2** below purchased from WFK are used as whiteness tracers. Before wash test, L, a, b values of all whiteness tracers are measured using Konica Minolta CM-3610D spectrophotometer.

**Table 2.**

| Code | % Fiber Content | Fiber Construction | Fabric Density (g/m) | Whiteness Index (WI) A* | Whiteness Index (WI) D65** | Size |
|---|---|---|---|---|---|---|
| Cotton Terry | 100 | Woven | ~540 | ~93 | ~163 | 8"x8" |
| | | | | | | (20 x 20 cm) |
| Cotton Knit | 100 | Weft Knit | ~220 | ~96 | ~165 | 8"x8" (20 x 20 cm) |
| Polyester/Cotton | 65/35 | Plain Woven | ~125 | ~98 | ~156 | 8"x8" (20 x 20 cm) |
| Polyester | 100 | Weft Knit | ~200 | ~95 | ~156 | 8"x8" (20 x 20 cm) |
| Cotton/Spandex | 98/2 | Woven Twill | ~180 | ~86 | ~158 | 8"x8" (20 x 20 cm) |
| Notes: *WI(A) - illuminant A (indoor lighting)<br>**WI(D65) - illuminant D65 (outdoor lighting) | | | | | | |

Three cycles of wash are needed to complete the test:

**Cycle 1:** desired amount of base detergent are fully dissolved by mixing with 7.57L water (at defined hardness) in each Miniwasher tube. 3.5 SBL2004 strips (~28 g of soil) and 3 whiteness tracers (internal replicate) of each fabric type are the washed and rinsed in the Miniwasher under defined conditions, then dried.

**Cycle 2:** The above whiteness tracers are washed again with new set of SBL2004 sheet, and dried. All other conditions remain same as cycle 1.

**Cycle 3:** The above whiteness tracers are washed again with new set of SBL2004 sheet, and dried. All other conditions remain same as cycle 1.

After Cycle 3, all whiteness tracers are dried and then measured again using Konica Minolta CM-3610D spectrophotometer. The changes in Whiteness Index (ΔWI(CIE)) are calculated based on L, a, b measure before and after wash.

$$\Delta WI(CIE) = WI(CIE)\ (after\ wash) - WI(CIE)(before\ wash).$$

Miniwasher have 5 pots, 5 products can be tested in one test. In a typically polymer whiteness performance test, one reference product containing comparative polymer, or no polymer are tested together with 4 products containing inventive polymers, "ΔWI versus reference" is reported.

$$\Delta WI(CIE)\ versus\ reference = \Delta WI(CIE)(product) - \Delta WI(CIE)(reference)$$

**Method for evaluating cleaning benefit of polymers**

Cleaning benefit of polymers are evaluated using tergotometer. Some examples test stains suitable for this test are:

Standard Grass ex CFT
Standard Clay ex CFT
ASTM Dust Sebum ex CFT
Highly Discriminating Sebum on polycotton ex CFT
Burnt Bacon on Knitted cotton (prepared using burnt bacon ex Equest)
Dyed Bacon on Knitted Cotton (prepared using dyed bacon ex Equest)

The fabrics were analyzed using commercially available DigiEye software for L, a, b values.

Inventive polymer stock solution in de-ionized water is prepared to deliver the desired dosage via 5ml aliquot. To make 1L of test solution, 5ml aliquot of polymer stock solution, and desired amount of base detergent are fully dissolved by mixing with water (at defined hardness) in tergotometer pot. The wash temperature is 20°C.

The fabrics to be washed in each tergotometer pot include 2 pieces of each test stain (2 internal replicates), approximately 3g of WfK SBL 2004 soil sheets, and additional knitted cotton ballast to make the total fabric weight up to 60 g.

Once all the fabrics are added into tergotometer pot containing wash solution, the wash solution is agitated for 12 minutes. The wash solutions are then drained, and the fabrics are subject to 5 minute rinse steps twice before being drained and spun dry. The washed stains are dried in an airflow cabinet, then analyzed using commercially available DigiEye software for L, a, b values.

This procedure was repeated further three times to give a total of 4 external replicates.

Stain Removal Index (SRI) are calculated from the L, a, b values using the formula shown below. The higher the SRI, the better the stain removal.

$$SRI = 100*((\Delta E_b - \Delta E_a)/\ \Delta E_b)$$

$$\Delta E_b = \sqrt{}((L_c\text{-}L_b)^2 + (a_c\text{-}a_b)^2 + (b_c\text{-}b_b)^2)$$

$$\Delta E_a = \sqrt{}((L_c\text{-}L_a)^2 + (a_c\text{-}a_a)^2 + (b_c\text{-}b_a)^2)$$

Subscript 'b' denotes data for the stain before washing
Subscript 'a' denotes data for the stain after washing
Subscript 'c' denotes data for the unstained fabric

**Preparation of Poly Alpha-1,6-Glucan Samples**

Methods to prepare poly alpha-1,6-glucan containing various amounts of alpha-1,2 branching are disclosed in published patent application WO2017/091533. Reaction parameters such as sucrose concentration, temperature, and pH can be adjusted to provide poly alpha-1,6-glucan having various levels of alpha-1,2-branching and molecular weight. A representative procedure for the preparation of alpha-1,2-branched poly alpha-1,6-glucan is provided below (containing 19% alpha-1,2-branching and 81% alpha-1,6 linkages). The 1D $^1H$ NMR spectrum was used to quantify glycosidic linkage distribution. Additional samples of poly alpha-1,6-glucan with alpha-1,2-branching were prepared similarly. For example, one sample contained 32% alpha-1,2-branching and 68% alpha-1,6 linkages, and another contained 10% alpha-1,2-branching and 90% alpha-1,6 linkages.

**Preparation of Poly Alpha-1,6-Glucan with 19% Alpha-1,2 Branching**

Soluble alpha-1,2-branched poly alpha-1,6-glucan was prepared using stepwise combination of glucosyltransferase GTF8117 and alpha-1,2 branching enzyme GTFJ18T1, according to the following procedure.

A reaction mixture (2 L) comprised of sucrose (450 g/L), GTF8117 (9.4 U/mL), and 50 mM sodium acetate was adjusted to pH 5.5 and stirred at 47 °C. Aliquots (0.2 - 1 mL) were withdrawn at predetermined times and quenched by heating at 90 °C for 15 min. The resulting heat-treated aliquots were passed through 0.45-$\mu$m filter. The flow-through was analyzed by HPLC to determine the concentration of sucrose, glucose, fructose, leucrose, oligosaccharides and polysaccharides. After 23.5 h, the reaction mixture was heated to 90 °C for 30 minutes. An aliquot of the heat-treated reaction mixture was passed through 0.45-$\mu$m filter and the flow-through was analyzed for soluble mono/disaccharides, oligosaccharides, and polysaccharides. A major product was linear dextran with a DPw of 93.

A second reaction mixture was prepared by adding 238.2 g of sucrose and 210 mL of alpha-1,2-branching enzyme GTFJ18T1 (5.0 U/mL) to the leftover heat-treated reaction mixture that was obtained from the GTF8117 reaction described immediately above. The mixture was stirred at 30 °C with a volume of ~ 2.2 L. Aliquots (0.2 - 1 mL) were withdrawn at predetermined times and quenched by heating at 90 °C for 15 min. The resulting heat-treated aliquots were passed through 0.45-$\mu$m filter. The flow-through was analyzed by HPLC to determine the concentration of sucrose, glucose, fructose, leucrose, oligosaccharides and polysaccharides. After 95 h, the reaction mixture was heated to 90 °C for 30 minutes. An aliquot of the heat-treated reaction mixture was passed through 0.45-$\mu$m filter and the flow-through was analyzed for soluble mono/disaccharides, oligosaccharides, and polysaccharides. Leftover heat-treated mixture was centrifuged using 1 L centrifugation bottles. The supernatant was collected and cleaned more than 200-fold using ultrafiltration system with 1 or 5 KDa MWCO cassettes and deionized water. The cleaned oligo/polysaccharide product solution was dried. Dry sample was then analyzed by $^1H$ NMR spectroscopy to determine the anomeric linkages of the oligosaccharides and polysaccharides.

**Inventive Polymer Example 1**

**Modification of Poly Alpha-1,6-Glucan with 2-Octen-1-yl Succinic Anhydride**

Poly alpha-1,6-glucan powder (15 kDa, 9% alpha-1,2-branching and 91% alpha-1,6 linkages, 10 g) (prepared as described herein above) was dissolved in 15 mL water. To this stirring solution was added 2-octen-1-yl succinic anhydride (3 g). The pH of the mixture was adjusted to pH 9 - 10 with 2.5 wt% NaOH solution. The pH of the reaction was continually adjusted to maintain pH 11 for three hours. The mixture was then neutralized to pH 6.5-7.5. The solution was poured into 100 mL isopropanol to precipitate the polymer. The polymer was collected. This process was repeated two more times. The final polymer was dissolved in water and lyophilized to yield white powder. The degree of substitution was determined by $^1H$ NMR analysis to be 0.15.

**Inventive Polymer Example 2**

**Modification of Poly Alpha-1,6-Glucan with Benzoic Anhydride**

A 4-neck, 250 mL round bottom flask containing a stir rod, thermocouple, addition funnel, and condenser with $N_2$ inlet on top was charged with a mixture of DMAc (100 mL), $CaCl_2 \cdot 2H_2O$ (4 g), and poly alpha-1,6-glucan (68 kDa, 33% alpha-1,2 branching and 67% alpha 1,6 linkages). The reaction mixture was stirred at 75 °C until a clear solution was

formed. Azeotropic distillation was then performed with toluene (25 mL). After that, $K_2CO_3$ (6 g) and benzoic anhydride (17 g) were added. The reaction mixture was heated with an 88 °C oil bath for 4 hours. Once the reaction reached completion, it was cooled down to room temperature. The desired product was precipitated by isopropanol, washed by isopropanol/-water (90/10), and the crude product was further purified through ultrafiltration (MWCO 3 KD) to afford 16 grams of solid. The degree of substitution was determined by $^1H$ NMR analysis to be 0.1.

**Inventive Polymer Example 3**

**Modification of Poly Alpha-1,6-Glucan with Benzoyl Chloride and Glutaric Anhydride**

Poly alpha-1,6-glucan powder (68 kDa, 33% alpha-1,2-branching and 67% alpha-1,6 linkages, 20 gram) was dissolved in DMAc (100 mL) at 80 °C. Toluene (25 mL) was added and distilled off to dry the reaction mixture. After that, glutaric anhydride (2.5 gram) and benzoyl chloride (14 gram) were added. The reaction mixture was stirred at 80 °C for 4 h. The product was precipitated and purified using isopropanol. 21 gram of desired material was produced. This product was determined to by $^1H$ NMR analysis to have DoS (benzoyl) of 0.26 and DoS (glutaroyl) of 0.12.

**Inventive Polymer Example 4**

**Modification of Poly Alpha-1,6-Glucan with Benzoyl Chloride and DMAc**

Poly alpha-1,6-glucan powder (68 kDa, 33% alpha-1,2-branching and 67% alpha-1,6 linkages, 20 gram) was dissolved in dimethylacetamide (DMAc, 100 mL) at 80 °C. Azeotropic distillation was then performed with toluene (25 mL). After that, benzoyl chloride (17.5 gram) was added. The reaction mixture was stirred at 80 °C for 4 h. The product was precipitated and purified using isopropanol. It was determined by $^1H$ NMR analysis to have DoS (benzoyl) of 0.79 and DoS (acetyl) of 0.17.

**Inventive Polymer Example 5**

**Modification of Poly Alpha-1,6-Glucan with Benzoyl Chloride**

Poly alpha-1,6-glucan powder (68 kDa, 33% alpha-1,2-branching and 67% alpha-1,6 linkages, 20 gram) and $CaCl_2 \cdot 2H_2O$ (4 gram) were dissolved in DMAc (100 mL) at 80 °C. Azeotropic distillation was then performed with toluene (25 mL). After that, $K_2CO_3$ (6 gram) and benzoyl chloride (17.5 gram) were added. The reaction mixture was stirred at 80 °C for 105 minutes. The product was precipitated and purified using isopropanol. It was determined by $^1H$ NMR analysis to have DoS (benzoyl) of 0.25.

**Inventive Polymer Example 6**

**Modification of Poly Alpha-1,6-Glucan with Benzoyl Chloride and Acetyl Chloride**

Poly alpha-1,6-glucan powder (68 kDa, 33% alpha-1,2-branching and 67% alpha-1,6 linkages, 30 gram) was dissolved in DMAc (150 mL) at 90 °C. Azeotropic distillation was then performed with toluene (25 mL). After that, benzoyl chloride (16 gram) and acetyl chloride (3 gram) were added. The reaction mixture was stirred at 90 °C for 2 hrs. The product was precipitated and purified using isopropanol. 28 gram of desired material was produced. It was determined by $^1H$ NMR analysis to have DoS (benzoyl) of 0.37 and DoS (acetyl) of 0.36.

**Inventive Polymer Example 7**

**Modification of Poly Alpha-1,6-Glucan with Benzoyl Chloride and DMAc**

Poly alpha-1,6-glucan powder (56 kDa, 22% alpha-1,2-branching and 78% alpha-1,6 linkages, 20 gram) and $CaCl_2 \cdot 2H_2O$ (2 gram) were dissolved in DMAc (100 mL) at 90 °C. Azeotropic distillation was then performed with toluene (25 mL). After that, benzoyl chloride (17.5 gram) was added. The reaction mixture was stirred at 90 °C for 1 hr. The product was precipitated and purified using isopropanol. It was determined by $^1H$ NMR analysis to have DoS (benzoyl) of 0.33 and DoS (acetyl) of 0.14.

**Inventive Polymer Example 8**

**Modification of Poly Alpha-1,6-Glucan with Benzoyl Chloride and DMAc**

Poly alpha-1,6-glucan powder (60 kDa, 10% alpha-1,2 branching and 90% alpha-1,6 linkages, 20 gram) and $CaCl_2 \cdot 2H_2O$ (2 gram) were dissolved in DMAc (120 mL) at 90 °C. Azeotropic distillation was then performed with toluene (25 mL). After that, benzoyl chloride (15 gram) was added. The reaction mixture was stirred at 90 °C for 2 hrs. The product was precipitated and purified using isopropanol. 23 gram of desired material was produced. It was determined by $^1H$ NMR analysis to have DoS (benzoyl) of 0.29 and DoS (acetyl) of 0.09.

**Inventive Polymer Example 9**

**Modification of Poly Alpha-1,6-Glucan with Benzoyl Chloride and DMAc**

Poly alpha-1,6-glucan (56 kDa, 21% alpha-1,2 branching and 79% alpha-1,6 linkages, 200 gram) was soaked in DMAc (1 L) overnight. The mixture heated to 88 °C. DMAc was distilled off under vacuum (~300 mL was removed). To the mixture remaining in the pot was added benzoyl chloride (102 gram) over 10 min. The reaction mixture was stirred for 5-10 minutes, then acetyl chloride (28 gram) was added (over 5-10 min). The reaction mixture was stirred at 88 °C for 1.5 hrs. The reaction mixture was cooled down to room temperature. The crude product was precipitated in isopropanol and washed with isopropanol and dried. It was determined by $^1H$ NMR analysis to have DoS (benzoyl) of 0.36 and DoS (acetyl) of 0.44.

**Inventive Polymer Example 10**

**Modification of Poly Alpha-1,6-Glucan with 2-Furoyl Chloride**

Poly alpha-1,6-glucan powder (56 kDa, 21% alpha-1,2-branching and 79% alpha-1,6 linkages, 20.18 gram) was suspended in DMAc (100 mL) and stirred overnight at room temperature. DMAc (21.81 g) was distilled off at 83 °C and 20 torr followed by the dropwise addition of 2-furoyl chloride (10.06 g) to the material remaining in the pot. The reaction mixture was stirred at 85 °C for 5 h. The product was precipitated and purified using isopropanol yielding 24.75 g of a light tan powder after vacuum drying. DoS (2-Furoyl): 0.21.

**Example 11**

**Biodegradation Test Results**

The biodegradability of the polysaccharide derivative of Example 5, 6, 7, 8, 9 were determined by following the OECD 301B Ready Biodegradability $CO_2$ Evolution Test Guideline. In this study, the test substance is the sole carbon and energy source and under aerobic conditions microorganisms metabolize the test substance producing $CO_2$ or incorporating the carbon into biomass. The amount of $CO_2$ produced by the test substance (corrected for the $CO_2$ evolved by the blank inoculum) is expressed as a percentage of the theoretical amount of $CO_2$ ($ThCO_2$) that could have been produced if the organic carbon in the test substance was completely converted to $CO_2$.

**Table 3.** Biodegradation Results

| Example | Polysaccharide Ester from | % $CO_2$ at 12 days |
|---|---|---|
| 11A | Inventive Polymer Example 5 | 40 |
| 11B | Inventive Polymer Example 6 | 40 |
| 11C | Inventive Polymer Example 7 | 50 |
| 11D | Inventive Polymer Example 8 | 60 |
| 11E | Inventive Polymer Example 9 | 40 |

These results **(Table 3)** show the polysaccharide esters have degraded by at least 40% at less than 90 days.

**Example 12**

**Polymer Performance in Liquid Detergent**

Liquid detergents I and II below are prepared by traditional means known to those of ordinary skill in the art by mixing the listed ingredients:

*: including Protease, Mannanase, Amylase

| Ingredients | I (Comparative) | II (Inventive) |
|---|---|---|
| LAS (%) | 8.00 | 8.00 |
| AES (%) | 3.96 | 3.96 |
| NI (%) | 3.83 | 3.83 |
| Amine Oxide (%) | 0.51 | 0.51 |
| 1,2-Propanediol (%) | 0.51 | 0.51 |
| Sodium cumene sulfonate (%) | 2.23 | 2.23 |
| Citric Acid (%) | 2.79 | 2.79 |
| Fatty Acid (%) | 1.73 | 1.73 |
| Ethanol (%) | 0.42 | 0.42 |
| Brightener (%) | 0.046 | 0.046 |
| Inventive Polymer Example 9 (%) | 0.00 | 2.00 |
| Enzyme system (%) * | 0.033 | 0.033 |
| Preservative (%) | 0.005 | 0.005 |
| Water | balance | balance |

The whiteness maintenance of inventive polymer Example 9 is evaluated according to the method for evaluating whiteness performance of polymers (method A) by comparing the whiteness of formula I and II. As shown in the following table, inventive polymer Example 9 delivers significant whiteness benefit, especially on synthetic fabric.

s: data are statistically significant.

| Tracer Fabric | ΔWI(CIE) (I) | ΔWI(CIE) (II) | Delta |
|---|---|---|---|
| PE: 100% Polyester Knit | -22.2 | -2.2 | 20.0s |

Soluble unit dose detergents III and IV below are prepared by traditional means known to those of ordinary skill in the art by mixing the listed ingredients:

| Ingredients | III (Comparative) | IV (Inventive) |
|---|---|---|
| LAS (%) | 23.73 | 23.73 |
| AES (%) | 11.45 | 11.45 |
| NI (%) | 3.34 | 3.34 |
| Suds Suppressor (%) | 0.10 | 0.10 |
| Inventive Polymer Example 9 (%) | 0.00 | 5.88 |
| DTPA (%) | 0.49 | 0.49 |
| Monoethanolamine (%) | 9.04 | 9.04 |
| 1,2 PropaneDiol (%) | 8.78 | 8.78 |
| DiPropyleneGlycol (%) | 4.33 | 4.33 |
| Sodium Bisulphite (%) | 0.17 | 0.17 |
| Citric Acid (%) | 0.49 | 0.49 |

(continued)

| Ingredients | III (Comparative) | IV (Inventive) |
|---|---|---|
| Fatty Acid (%) | 6.85 | 6.85 |
| Glycerine (%) | 4.34 | 4.34 |
| Brightener (%) | 0.20 | 0.20 |
| Protease 1 (%) | 0.082 | 0.082 |
| Protease 2 (%) | 0.031 | 0.031 |
| Amylase 1 (%) | 0.005 | 0.005 |
| Amylase 2 (%) | 0.005 | 0.005 |
| Mannanase (%) | 0.004 | 0.004 |
| Preservative (%) | 0.009 | 0.009 |
| Structurant (%) | 0.09 | 0.09 |
| Perfume (%) | 1.89 | 1.89 |
| Dye (%) | 0.013 | 0.013 |
| Water | balance | Balance |

The whiteness maintenance of inventive polymer Example 9 is evaluated according to method for evaluating whiteness performance of polymers (method A) by comparing the whiteness performance of formula III and IV. As shown in the following table, inventive polymer Example 9 delivers significant whiteness benefit, especially on synthetic fabric.

s: data are statistically significant.

| Tracer Fabric | ΔWI(CIE) (III) | ΔWI(CIE) (IV) | Delta |
|---|---|---|---|
| PE: 100% Polyester Knit | -40.6 | -4.8 | 35.8s |

Liquid base detergents V, VI-a, VI-b, VI-c, VI-d below are prepared by traditional means known to those of ordinary skill in the art by mixing the listed ingredients:

| | Comparati ve | Inventive | | | |
|---|---|---|---|---|---|
| Ingredients | V | VI-a | VI-b | VI-C | VI-D |
| AES (%) | 5.78 | 5.78 | 5.78 | 5.78 | 5.78 |
| NI C45EO7 (%) | 6.57 | 6.57 | 6.57 | 6.57 | 6.57 |
| NI C24EO9 (%) | 0.10 | 0.10 | 0.10 | 0.10 | 0.10 |
| LAS (%) | 10.60 | 10.60 | 10.60 | 10.60 | 10.60 |
| DTPA (%) | 0.46 | 0.46 | 0.46 | 0.46 | 0.46 |
| Monoethanolamine (%) | 2.52 | 2.52 | 2.52 | 2.52 | 2.52 |
| Sodium cumene sulfonate (%) | 1.21 | 1.21 | 1.21 | 1.21 | 1.21 |
| NaOH (%) | 0.43 | 0.43 | 0.43 | 0.43 | 0.43 |
| Sodium Tetraborate (%) | 1.21 | 1.21 | 1.21 | 1.21 | 1.21 |
| Citric acid (%) | 1.60 | 1.60 | 1.60 | 1.60 | 1.60 |
| Calcium formate (%) | 0.12 | 0.12 | 0.12 | 0.12 | 0.12 |
| Ethanol (%) | 1.61 | 1.61 | 1.61 | 1.61 | 1.61 |
| Brightener (%) | 0.16 | 0.16 | 0.16 | 0.16 | 0.16 |
| Dye (%) | 0.04 | 0.04 | 0.04 | 0.04 | 0.04 |

(continued)

| | Comparati ve | Inventive | | | |
|---|---|---|---|---|---|
| Ingredients | V | VI-a | VI-b | VI-C | VI-D |
| Enzyme (Protease, Amylase, Mannanase) (%) | 0.08 | 0.08 | 0.08 | 0.08 | 0.08 |
| Perfume (%) | 0.57 | 0.57 | 0.57 | 0.57 | 0.57 |
| Antifoam | 0.20 | 0.20 | 0.20 | 0.20 | 0.20 |
| Structurant | 0.10 | 0.10 | 0.10 | 0.10 | 0.10 |
| Inventive polymer Example 5 | 0.00 | 2.65 | 0.00 | 0.00 | 0.00 |
| Inventive polymer Example 7 | 0.00 | 0.00 | 2.65 | 0.00 | 0.00 |
| Inventive polymer Example 9 | 0.00 | 0.00 | 0.00 | 2.65 | 0.00 |
| Inventive polymer Example 10 | 0.00 | 0.00 | 0.00 | 0.00 | 2.65 |
| Water | Balance | Balanc e | Balanc e | Balanc e | Balanc e |
| ΔWI(CIE) versus reference on PE (100% polyester knit) | reference | 7.10 | 8.48 | 20.08 | 4.18 |

The whiteness maintenance of inventive polymer example 5, 7, 9, 10 are evaluated according to the method for evaluating whiteness performance of polymers (method B) by comparing the whiteness performance of comparative formulation V and inventive formulation VIa, VI-b, VI-c, VI-d. As shown in the results, inventive polymer Example 5, 7, 9, 10 deliver significant whiteness benefit, especially on synthetic fabric.

Liquid detergents VII and VIII below are prepared by traditional means known to those of ordinary skill in the art by mixing the listed ingredients:

| Ingredients | VII (Comparative) | VIII (Inventive) |
|---|---|---|
| LAS (%) | 11.57 | 11.57 |
| AES (%) | 9.71 | 9.71 |
| NI (%) | 5.84 | 5.84 |
| Amine Oxide (%) | 0.98 | 0.98 |
| DTPA (%) | 0.69 | 0.69 |
| NaOH (%) | 1.89 | 1.89 |
| 1,2-Propanediol (%) | 9.59 | 9.59 |
| Sodium cumene sulfonate (%) | 0.24 | 0.24 |
| Citric Acid (%) | 3.72 | 3.72 |
| Fatty Acid (%) | 2.95 | 2.95 |
| Brightener (%) | 0.11 | 0.11 |
| Inventive Polymer Example 9 (%) | 0.00 | 1.50 |
| Protease (%) | 0.048 | 0.048 |
| Amylase (%) | 0.006 | 0.006 |
| Mannanase (%) | 0.005 | 0.005 |
| Pectate Lyase (%) | 0.003 | 0.003 |
| Preservative (%) | 0.005 | 0.005 |
| Perfume (%) | 1.400 | 1.400 |
| Structurant (%) | 0.260 | 0.260 |
| Suds Suppresser (%) | 0.003 | 0.003 |

(continued)

| Ingredients | VII (Comparative) | VIII (Inventive) |
|---|---|---|
| Dye (%) | 0.005 | 0.005 |
| Water | balance | balance |

The cleaning benefit of inventive polymer Example 9 is evaluated according to method for evaluating cleaning benefit of polymers by comparing the cleaning performance of formula VII and VIII. As shown in the following table, inventive polymer Example 9 delivers significant cleaning benefit, especially on greasy stain such as burnt butter.

| Stains | SRI (VII) | SRI (VIII) | Delta SRI |
|---|---|---|---|
| Burnt Butter | 61.4 | 70.5 | +9.1s |
| Note: product concentration of the test: 2260ppm; water hardness: 22gpg; s: data statistically significant. | | | |

**Example 13**

The following polymer samples were subjected to the biodegradation test method (described above). The polymers of the present invention show significantly higher biodegradation compared to example polymers from US 2020/002646.

| Sample | Backbone | Modification | % $CO_2$ evolved (in 28 days) |
|---|---|---|---|
| Comparative polymer from US2020/0024646, example 8 | Alpha-1,6 backbone, 25% branching, 17K | Tosyl (0.2) SSO4 (0.5) | 28% |
| Comparative polymer from US2020/0024646, example 13B | Alpha-1,3, 120K | Benzyl (0.5)<br>$-CH_2-COOH$ (0.5) | 2.5% |
| Inventive polymer example 5 | Alpha-1,6, 30-40% branching, 40K | Benzoyl ester (0.25) | 66.2% |
| Inventive polymer example 6 | Alpha-1,6, 30-40% branching, 40K | Benzoyl ester (0.30)<br>Acetyl (0.15) | 64.7% |
| Inventive polymer example 7 | Alpha-1,6, 15-25% branching, 40K | benzoyl ester (0.30)<br>acetyl (0.06) | 74.6% |
| Inventive polymer example 8 | Alpha-1,6, 10% branching, 40K | benzoyl ester (0.2)<br>acetyl (0.4) | 78.4% |
| Inventive polymer example 9 | Alpha-1,6, 20% branching, 40K | benzoyl ester (0.36)<br>acetyl (0.44) | 80.8% |

**Claims**

**1.** A laundry care or dish care composition comprising a poly alpha-1,6-glucan ester compound, where the poly alpha-1,6-glucan ester compound comprises:

(i) a poly alpha-1,6-glucan backbone wherein 40% or more of the glucose monomer units are linked via alpha-1,6-glycosidic linkages; and from 0 to 50% glucose units of the poly alpha-1,6 glucan backbone further contains glucose branching moiety linked via alpha-1,2- or alpha-1,3-glycosidic linkages; and
(ii) one or more ester groups selected from:

(a) an aryl ester group;

(b) a first acyl group comprising -CO-R", wherein R" comprises a chain of 1 to 24 carbon atoms, and
(c) a second acyl group comprising -CO-Cx-COOH, wherein the -Cx- portion of the second acyl group comprises a chain of 2 to 24 carbon atoms,

wherein the poly alpha-1,6-glucan ester compound has a degree of polymerization (DPn) in the range of 5 to 1400, and
wherein the degree of substitution of ester groups is from 0.001 to 1.50.

**2.** The composition of claim 1, wherein at least 5% of glucose units of the poly alpha-1,6-glucan backbone contain branches via alpha-1,2- or alpha-1,3-glycosidic linkages.

**3.** The composition of any preceding claim, wherein the ester group is independently an aryl ester group or a first acyl group.

**4.** The composition of claim 3, wherein the aryl ester group comprises a benzoyl group or a benzoyl group substituted with at least one halogen, alkyl, halogenated alkyl, ether, cyano, or aldehyde group, or a combination thereof.

**5.** The composition of claim 3, wherein the first acyl group is an acetyl or a propionyl group.

**6.** The composition of claim 3, wherein the aryl ester group comprises a benzoyl group and the first acyl group is an acetyl or a propionyl group.

**7.** The composition of claim 1, wherein the ester group comprises at least one first acyl group.

**8.** The composition of claim 1, wherein the ester group comprises at least one second acyl group.

**9.** The composition of claim 8, wherein the $-C_x-$ portion of the second acyl group comprises only $CH_2$ groups.

**10.** The composition of claim 8, wherein the $-C_x-$ portion of the second acyl group comprises:

(i) at least one double-bond in the carbon atom chain, and/or
(ii) at least one branch.

**11.** The composition of claim 1, wherein the ester group comprises at least one first acyl group and at least one second acyl group.

**12.** The composition of any preceding claim, wherein the degree of substitution of ester groups is 0.01 to 0.90, preferably 0.01 to 0.80, more preferably 0.01 to 0.70.

**13.** The composition of any preceding claim, wherein the poly alpha-1,6-glucan ester compound has a biodegradability as determined by the Carbon Dioxide Evolution Test Method of at least 10% on the $90^{th}$ day.

**14.** The composition of any preceding claim, wherein the composition is a laundry detergent composition and wherein the composition comprises a detersive surfactant.

**15.** A dish care or laundry care composition comprising detersive surfactant and a poly alpha-1,6-glucan ester compound represented by the structure:

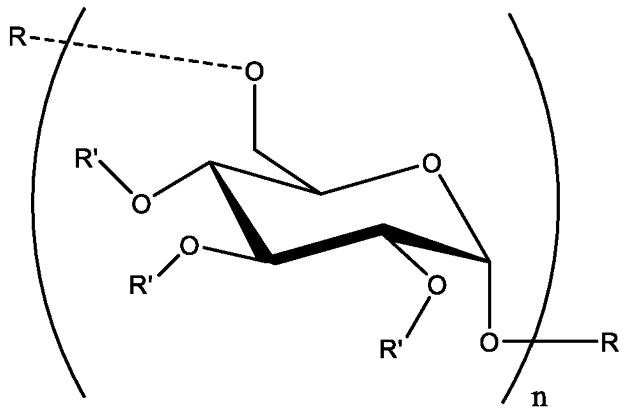

Structure A

wherein each R’ is independently one or more selected from a list comprising:

(a) a glucose branching moiety;
(b) an aryl ester functional group;
(c) a first acyl group comprising -CO-R" wherein R" comprises a chain of 1 to 24 carbon atoms; and
(d) a second acyl group comprising -CO-$C_x$-COOH, wherein the -$C_x$- portion of the second acyl group comprises a chain of 2 to 24 carbon atoms,

wherein each R is independently one or more selected from a list comprising:

(a) an aryl ester functional group;
(b) a first acyl group comprising -CO-R" wherein R" comprises a chain of 1 to 24 carbon atoms; and
(c) a second acyl group comprising -CO-$C_x$-COOH, wherein the -$C_x$- portion of the second acyl group comprises a chain of 2 to 24 carbon atoms,

wherein 40% or more of the glucose monomer units are linked via alpha-1,6-glycosidic linkages, n is at least 5, and, from 0 to 50% glucose units of the poly alpha-1,6 glucan backbone further contains glucose branching moiety via alpha-1,2- or alpha-1,3-glycosidic linkages,
wherein each glucose branching moiety independently modified by one or more group selected from a list comprising:

(a) an aryl ester functional group;
(b) a first acyl group comprising -CO-R" wherein R" comprises a chain of 1 to 24 carbon atoms; and
(c) a second acyl group comprising -CO-$C_x$-COOH, wherein the -$C_x$- portion of the second acyl group comprises a chain of 2 to 24 carbon atoms,

wherein the degree of substitution for ester group of the poly alpha-1,6-glucan ester compound is 0.001 to 1.50.

**Patentansprüche**

**1.** Wäschepflege- oder Geschirrpflegezusammensetzung, umfassend eine Poly-Alpha-1,6-Glucanesterverbindung, in der die Poly-Alpha-1,6-Glucanesterverbindung umfasst:

(i) ein Poly-Alpha-1,6-Glucan-Grundgerüst, wobei 40 % oder mehr der Glucosemonomerelemente über Alpha-1,6-glycosidische Bindungen verknüpft sind; und von 0 bis 50 % Glucoseelemente des Poly-Alpha-1,6-Glucan-Grundgerüsts ferner eine Glucoseverzweigungseinheit enthalten, die über Alpha-1,2- oder Alpha-1,3-glycosidische Bindungen verknüpft ist; und
(ii) eine oder mehrere Estergruppen, die ausgewählt sind aus:

(a) einer Arylestergruppe;

(b) eine erste Acylgruppe, umfassend -CO-R", wobei R" eine Kette von 1 bis 24 Kohlenstoffatomen umfasst, und

(c) eine zweite Acylgruppe, umfassend -CO-Cx-COOH, wobei der -Cx- Abschnitt der zweiten Acylgruppe eine Kette von 2 bis 24 Kohlenstoffatomen umfasst,

wobei die Poly-Alpha-1,6-Glucanester-Verbindung einen Polymerisationsgrad (DPn) in dem Bereich von 5 bis 1400 aufweist, und
wobei der Substitutionsgrad der Estergruppen von 0,001 bis 1,50 beträgt.

2. Zusammensetzung nach Anspruch 1, wobei wenigstens 5 % der Glucoseelemente des Poly-Alpha-1,6-Glucan-Grundgerüsts Verzweigungen über Alpha-1,2- oder Alpha-1,3-glycosidische Bindungen enthalten.

3. Zusammensetzung nach einem der vorstehenden Ansprüche, wobei die Estergruppe unabhängig eine Arylestergruppe oder eine erste Acylgruppe ist.

4. Zusammensetzung nach Anspruch 3, wobei die Arylestergruppe eine Benzoylgruppe oder eine Benzoylgruppe umfasst, die mit wenigstens einer Halogen-, Alkyl-, halogeniertes-Alkyl-, Ether-, Cyano- oder Aldehydgruppe oder einer Kombination davon substituiert ist.

5. Zusammensetzung nach Anspruch 3, wobei die erste Acylgruppe eine Acetyl- oder eine Propionylgruppe ist.

6. Zusammensetzung nach Anspruch 3, wobei die Arylestergruppe eine Benzoylgruppe umfasst und die erste Acylgruppe eine Acetyl- oder Propionylgruppe ist.

7. Zusammensetzung nach Anspruch 1, wobei die Estergruppe wenigstens eine erste Acylgruppe umfasst.

8. Zusammensetzung nach Anspruch 1, wobei die Estergruppe wenigstens eine zweite Acylgruppe umfasst.

9. Zusammensetzung nach Anspruch 8, wobei der -$C_x$- Abschnitt der zweiten Acylgruppe nur $CH_2$-Gruppen umfasst.

10. Zusammensetzung nach Anspruch 8, wobei der -$C_x$- Abschnitt der zweiten Acylgruppe umfasst:

(i) wenigstens eine Doppelbindung in der Kohlenstoffatomkette und/oder
(ii) wenigstens eine Verzweigung.

11. Zusammensetzung nach Anspruch 1, wobei die Estergruppe wenigstens eine erste Acylgruppe und wenigstens eine zweite Acylgruppe umfasst.

12. Zusammensetzung nach einem der vorstehenden Ansprüche, wobei der Substitutionsgrad der Estergruppen 0,01 bis 0,90, vorzugsweise 0,01 bis 0,80, mehr bevorzugt 0,01 bis 0,70 beträgt.

13. Zusammensetzung nach einem der vorstehenden Ansprüche, wobei die Poly-Alpha-1,6-Glucanesterverbindung eine biologische Abbaubarkeit, wie durch das Kohlendioxidevolutionsprüfverfahren bestimmt, von wenigstens 10 % an dem 90. Tag aufweist.

14. Zusammensetzung nach einem der vorstehenden Ansprüche, wobei die Zusammensetzung eine Wäschewaschmittelzusammensetzung ist und wobei die Zusammensetzung ein Reinigungstensid umfasst.

15. Geschirrspül- oder Wäschepflegezusammensetzung, umfassend ein Reinigungstensid und eine Poly-Alpha-1,6-Glucanesterverbindung, dargestellt durch die Struktur:

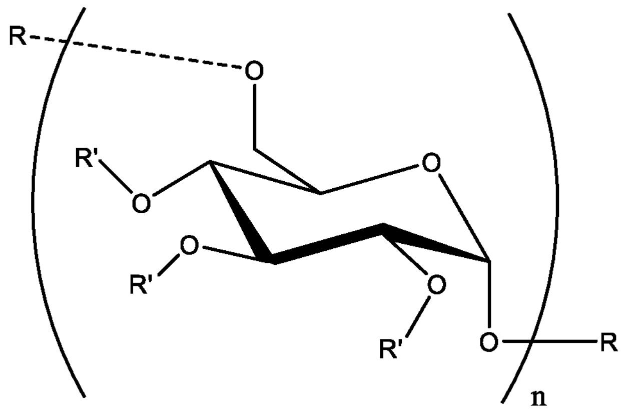

Struktur A

wobei jedes R' unabhängig ein oder mehrere ist, die aus einer Liste ausgewählt sind, umfassend:

(a) eine Glucoseverzweigungseinheit;
(b) eine funktionelle Arylestergruppe;
(c) eine erste Acylgruppe, umfassend -CO-R", wobei R" eine Kette von 1 bis 24 Kohlenstoffatomen umfasst; und
(d) einer Acylgruppe, umfassend -CO-$C_x$-COOH, wobei der -$C_x$- Abschnitt der zweiten Acylgruppe eine Kette von 2 bis 24 Kohlenstoffatomen umfasst,

wobei jedes R unabhängig ein oder mehrere ist, die aus einer Liste ausgewählt sind, umfassend:

(a) eine funktionelle Arylestergruppe;
(b) eine erste Acylgruppe, umfassend -CO-R", wobei R" eine Kette von 1 bis 24 Kohlenstoffatomen umfasst; und
(c) eine zweite Acylgruppe, umfassend -CO-$C_x$-COOH, wobei der -$C_x$- Abschnitt der zweiten Acylgruppe eine Kette von 2 bis 24 Kohlenstoffatomen umfasst,

wobei 40 % oder mehr der Glucosemonomerelemente über Alpha-1,6-glycosidische Bindungen verknüpft sind, n wenigstens 5 beträgt und von 0 bis 50 % der Glucoseelemente des Poly-Alpha-1,6-Glucan-Grundgerüsts ferner über Alpha-1,2- oder Alpha-1,3-glycosidische Bindungen eine Glucoseverzweigungseinheit enthalten,
wobei jede Glucoseverzweigungseinheit unabhängig durch eine oder mehrere Gruppen modifiziert ist, die aus einer Liste ausgewählt sind, umfassend:

(a) eine funktionelle Arylestergruppe;
(b) eine erste Acylgruppe, umfassend -CO-R", wobei R" eine Kette von 1 bis 24 Kohlenstoffatomen umfasst; und
(c) eine zweite Acylgruppe, umfassend -CO-$C_x$-COOH, wobei der -$C_x$- Abschnitt der zweiten Acylgruppe eine Kette von 2 bis 24 Kohlenstoffatomen umfasst,

wobei der Substitutionsgrad für die Estergruppe der Poly-Alpha-1,6-Glucanesterverbindung 0,001 bis 1,50 beträgt.

**Revendications**

1. Composition pour le soin du linge ou le soin de la vaisselle comprenant un composé ester de poly-alpha-1,6-glucane, où le composé ester de poly-alpha-1,6-glucane comprend :

(i) un squelette poly-alpha-1,6-glucane dans laquelle 40 % ou plus des motifs monomères de glucose sont liés par l'intermédiaire de liaisons alpha-1,6-glycosidiques ; et de 0 à 50 % de motifs glucose du squelette poly-alpha-1,6-glucane contient en outre un fragment de ramification glucose lié par l'intermédiaire de liaisons alpha-1,2- ou

alpha-1,3-glycosidiques ; et
(ii) un ou plusieurs groupes ester choisis parmi :

(a) un groupe ester d'aryle ;
(b) un premier groupe acyle comprenant -CO-R", dans laquelle R" comprend une chaîne de 1 à 24 atomes de carbone, et
(c) un second groupe acyle comprenant -CO-Cx-COOH, dans laquelle la partie -Cx-du second groupe acyle comprend une chaîne de 2 à 24 atomes de carbone,

dans laquelle le composé ester de poly-alpha-1,6-glucane a un degré de polymérisation (DPn) dans la plage de 5 à 1400, et
dans laquelle le degré de substitution des groupes ester va de 0,001 à 1,50.

**2.** Composition selon la revendication 1, dans laquelle au moins 5 % de motifs glucose du squelette poly-alpha-1,6-glucane contiennent des ramifications par l'intermédiaire de liaisons alpha-1,2- ou alpha-1,3-glycosidiques.

**3.** Composition selon l'une quelconque revendication précédente, dans laquelle le groupe ester est indépendamment un groupe ester d'aryle ou un premier groupe acyle.

**4.** Composition selon la revendication 3, dans laquelle le groupe ester d'aryle comprend un groupe benzoyle ou un groupe benzoyle substitué avec au moins un groupe halogène, alkyle, alkyle halogéné, éther, cyano ou aldéhyde, ou une combinaison de ceux-ci.

**5.** Composition selon la revendication 3, dans laquelle le premier groupe acyle est un groupe acétyle ou propionyle.

**6.** Composition selon la revendication 3, dans laquelle le groupe ester d'aryle comprend un groupe benzoyle et le premier groupe acyle est un groupe acétyle ou propionyle.

**7.** Composition selon la revendication 1, dans laquelle le groupe ester comprend au moins un premier groupe acyle.

**8.** Composition selon la revendication 1, dans laquelle le groupe ester comprend au moins un second groupe acyle.

**9.** Composition selon la revendication 8, dans laquelle la partie $-C_x-$ du second groupe acyle ne comprend que des groupes $CH_2$.

**10.** Composition selon la revendication 8, dans laquelle la partie $-C_x-$ du second groupe acyle comprend :

(i) au moins une double liaison dans la chaîne d'atomes de carbone, et/ou
(ii) au moins une ramification.

**11.** Composition selon la revendication 1, dans laquelle le groupe ester comprend au moins un premier groupe acyle et au moins un second groupe acyle.

**12.** Composition selon l'une quelconque revendication précédente, dans laquelle le degré de substitution des groupes ester va de 0,01 à 0,90, de préférence 0,01 à 0,80, plus préférablement 0,01 à 0,70.

**13.** Composition selon l'une quelconque revendication précédente, dans laquelle le composé ester de poly-alpha-1,6-glucane a une biodégradabilité telle que déterminée par le procédé de test de dégagement de dioxyde de carbone d'au moins 10 % au 90$^{e}$ jour.

**14.** Composition selon l'une quelconque revendication précédente, dans laquelle la composition est une composition détergente pour le lavage du linge et dans laquelle la composition comprend un agent tensioactif détersif.

**15.** Composition pour le soin de la vaisselle ou le soin du linge comprenant un agent tensioactif détersif et un composé ester de poly-alpha-1,6-glucane représenté par la structure :

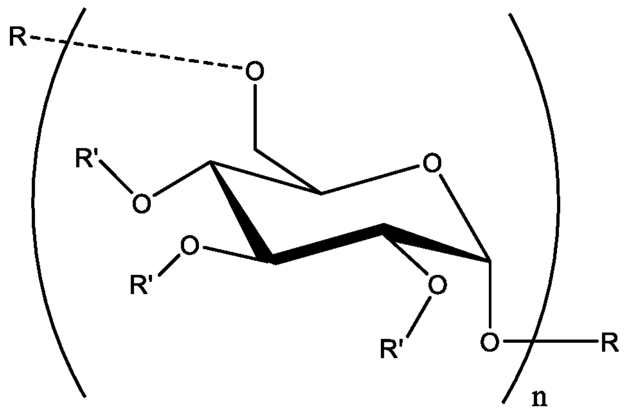

Structure A

dans laquelle chaque R’ est indépendamment un ou plusieurs choisis parmi une liste comprenant :

(a) un fragment de ramification glucose ;
(b) un groupe fonctionnel ester d’aryle ;
(c) un premier groupe acyle comprenant -CO-R" dans laquelle R" comprend une chaîne de 1 à 24 atomes de carbone ; et
(d) un second groupe acyle comprenant -CO-$C_x$-COOH, dans laquelle la partie -$C_x$- du second groupe acyle comprend une chaîne de 2 à 24 atomes de carbone,

dans laquelle chaque R est indépendamment un ou plusieurs choisis parmi une liste comprenant :

(a) un groupe fonctionnel ester d’aryle ;
(b) un premier groupe acyle comprenant -CO-R" dans laquelle R" comprend une chaîne de 1 à 24 atomes de carbone ; et
(c) un second groupe acyle comprenant -CO-$C_x$-COOH, dans laquelle la partie -$C_x$- du second groupe acyle comprend une chaîne de 2 à 24 atomes de carbone,

dans laquelle 40 % ou plus des motifs monomères de glucose sont liés par l’intermédiaire de liaisons alpha-1,6-glycosidiques, n vaut au moins 5, et, de 0 à 50 % de motifs glucose du squelette poly-alpha-1,6-glucane contient en outre un fragment de ramification glucose par l’intermédiaire de liaisons alpha-1,2- ou alpha-1,3-glycosidiques,
dans laquelle chaque fragment de ramification glucose est indépendamment modifié par un ou plusieurs groupes choisis parmi une liste comprenant :

(a) un groupe fonctionnel ester d’aryle ;
(b) un premier groupe acyle comprenant -CO-R" dans laquelle R" comprend une chaîne de 1 à 24 atomes de carbone ; et
(c) un second groupe acyle comprenant -CO-$C_x$-COOH, dans laquelle la partie -$C_x$- du second groupe acyle comprend une chaîne de 2 à 24 atomes de carbone,

dans laquelle le degré de substitution pour le groupe ester du composé ester de poly-alpha-1,6-glucane va de 0,001 à 1,50.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2020002646 A
- WO 2015183714 A
- WO 2017091533 A
- US 62871796
- WO 2014105698 A
- WO 2017003808 A
- WO 2018098065 A
- US 6020303 A
- US 6060443 A
- US 20200024646 A


### Non-patent literature cited in the description


- Food Carbohydrates: Chemistry, Physical Properties, and Applications. **S. W. CUI**. Structural Analysis of Polysaccharides. Taylor & Francis Group LLC, 2005
- **LOAN et al.** *Macromolecules*, vol. 33, 5730-5739
- **NAESSENS et al.** *J. Chem. Technol. Biotechnol.*, vol. 80, 845-860
- **SARWAT et al.** *Int. J. Biol. Sci.*, vol. 4, 379-386
- **ONILUDE et al.** *Int. Food Res. J.*, vol. 20, 1645-1651
- **VUILLEMIN et al.** *J. Biol Chem.*, 2016, vol. 291, 7687-7702
- **THOMAS HEINZE**. Esterification of Polysaccharides. Springer Laboratories, 2006